# EUROPÄISCHE PATENTANMELDUNG

(11) **EP 4 789 866 A1**
(43) Veröffentlichungstag der Anmeldung: **12.08.2026**
(21) Anmeldenummer: 25157213.7
(22) Anmeldetag: 11.02.2025
(51) Int. Cl.: B32B 7/12, B32B 27/08, B32B 27/16, B32B 27/32, C09J 175/04

(54) **VERFAHREN ZUR HERSTELLUNG EINES RECYCLEFÄHIGEN MONOMATERIAL-MEHRSCHICHTSYSTEMS MIT EINEM FETTSÄURE-HALTIGEN KLEBSTOFF**

(71) Anmelder: Covestro Deutschland AG, 51373 Leverkusen (DE)
(72) Erfinder: Fait, Thomas, 51063 Köln (DE); Thiebes, Christoph, 51061 Köln (DE); Fan, Zhirong, 40764 Langenfeld (DE); Kirstein, Oliver, 42349 Wuppertal (DE)
(74) Vertreter: Levpat

(57) **Zusammenfassung**

Die vorliegende Erfindung betrifft ein Verfahren zur Herstellung eines Monomaterial-Mehrschichtsystems, insbesondere eines recyclefähigen Monomaterial-Mehrschichtsystems, das durch dieses Verfahren erhaltene oder erhältliche Monomaterial-Mehrschichtsystem sowie die Verwendung des Monomaterial-Mehrschichtsystems. Darüber hinaus betrifft die Erfindung die Verwendung eines Klebstoffs in Monomaterial-Mehrschichtsystemen, insbesondere zur Verbesserung von deren Recyclingfähigkeit. Schließlich betrifft die Erfindung ein Verfahren zur Gewinnung eines Rezyklats aus Monomaterial-Mehrschichtsystem-haltigem Abfall, welcher ein erfindungsgemäßes Monomaterial-Mehrschichtsystem enthält, sowie ein Formteil, welches durch die Verarbeitung eines gemäß dem vorgenannten Recyclingverfahren erhaltenen oder erhältlichen Rezyklats erhalten oder erhältlich ist.

## Beschreibung

Die vorliegende Erfindung betrifft ein Verfahren zur Herstellung eines Monomaterial-Mehrschichtsystems, insbesondere eines recyclefähigen Monomaterial-Mehrschichtsystems, das durch dieses Verfahren erhaltene oder erhältliche Monomaterial-Mehrschichtsystem sowie die Verwendung des Monomaterial-Mehrschichtsystems. Darüber hinaus betrifft die Erfindung die Verwendung eines Klebstoffs in Monomaterial-Mehrschichtsystemen, insbesondere zur Verbesserung von deren Recyclingfähigkeit. Schließlich betrifft die Erfindung ein Verfahren zur Gewinnung eines Rezyklats aus Monomaterial-Mehrschichtsystem-haltigem Abfall, welcher ein erfindungsgemäßes Monomaterial-Mehrschichtsystem enthält, sowie ein Formteil, welches durch die Verarbeitung eines gemäß dem vorgenannten Recyclingverfahren erhaltenen oder erhältlichen Rezyklats erhalten oder erhältlich ist.

### Stand der Technik

Zur Verpackung von Industrie- und Konsumgütern werden häufig Verpackungen eingesetzt, die aus Folienverbünden (Mehrschichtsysteme) hergestellt werden, welche aus Folienlagen mit unterschiedlichen Eigenschaften bestehen. Solche Folienverbünde können beispielsweise durch Laminieren mit einem Klebstoff oder durch Extrusion, ggf. unter Einsatz einer Zwischenlage als Haftschicht (Tie-Layer) hergestellt werden. Beispielsweise enthalten solche mehrlagigen Folienverbünde Polyolefin- und Polyester- und Aluminiumfolienlagen. Die für die Verwendung als Verpackungsmaterial notwendigen Eigenschaften wie mechanische Festigkeit, Siegelfähigkeit und Barrierewirkung lassen sich durch die Kombination verschiedener Materialien mit ganz spezifischen Eigenschaften generieren. Leider lassen sich diese Verbundmaterialien aufgrund der verschiedenen Materialeigenschaften nicht im Sinne eines mechanischen Recyclings zu hochwertigen Rezyklaten verarbeiten. Das Recycling stellt jedoch eine interessante Möglichkeit dar, um Ressourcen zu schonen und die Umweltbelastung zu verringern. Immer mehr Unternehmen sind oft aus den vorgenannten Gründen sowie aus Kostengründen und regulatorischen Anforderungen bestrebt, ihre Emissionen zu reduzieren, weshalb auch dort Recyclingkonzepte wünschenswert sind. In der Industrie wird daher nach Wegen gesucht, um die Qualität der durch das mechanische Recycling von Verpackungen erzeugten Rezyklate zu erhöhen, damit diese in immer höheren Anteilen bei der Herstellung von Folien eingesetzt werden können.

In der letzten Zeit wurden sogenannte Monomaterial-Verpackungen bestehend aus Monomaterial-Schichtsystemen vorgestellt, die sich nach Gebrauch besonders gut für ein mechanisches Recycling eignen. Diese werden in der Regel hergestellt durch Extrusionslaminieren oder durch Laminieren von zwei Polyolefinfolienlagen mit einem Klebstoff, insbesondere durch Laminieren mit einem Zweikomponenten (2K)-Polyurethanklebstoff. Letzteres bietet den Vorteil, dass eine größere Bandbreite von Materialien eingesetzt werden kann, z.B. auch vorbeschichtete Folienlagen. Bei den sogenannten Monomaterialverpackungen werden ebenfalls Folienlagen mit verschiedenen Eigenschaften miteinander kombiniert, die jedoch größtenteils aus Materialien der gleichen Materialklasse, wie beispielsweise der Polyolefine bestehen. Die unterschiedlichen Eigenschaften der jeweiligen Folienlage können erreicht werden durch die Wahl unterschiedlicher Basispolymere, Zuschlagsstoffe, Vorbehandlung, insbesondere Beschichtung.

Es zeigt sich jedoch, dass sich die beim mechanischen Recycling von solchen Verpackungen bestehend aus Monomaterial-Schichtsystemen erhaltenen Rezyklate nicht oder nur bedingt zur Herstellung von qualitativ hochwertigen Folien oder anderen Formteilen eignen und wenn überhaupt nur in untergeordneter Menge beim Herstellprozess von neuen Polyolefinfolien aus sogenannten Virgin-Materialien zugesetzt werden können. Ein Problem besteht oft darin, dass die unter Einsatz von Rezyklat hergestellten neuen Folien optische Mängel und/oder im Vergleich zu aus "Virgin" Materialien hergestellten Folien schlechterer mechanische Eigenschaften (z.B. Reißdehnung, Modul) aufweisen, was auf die üblicherweise beim Laminieren von Folien verwendeten 2K-Polyurethanklebstoffe zurückgeführt werden, die in ausgehärteter Form mit Polyolefinen unverträglich sind und deren Verwendung zunehmend kritisch gesehen wird. Die Verwendung solcher Klebstoffe wird im Rahmen von Produktspezifikationen für recyclinggerechte Verpackungen auf geringe Gewichtsanteile beschränkt und es wird nach Alternativen gesucht.

CN 110861380 A beschreibt eine recyclingfähige Verpackung bei der ein Polyurethanklebstoff mit Barriere-Eigenschaften eingesetzt wird. Der Gehalt an nicht näher beschriebenen lösemittelfreiem Polyurethan-Klebstoff im Verbund wird hierbei auf unter 1% begrenzt. Ein Einfluss des Klebstoffes auf die Qualität der gewonnenen Rezyklate wird nicht erwähnt.

WO 2019/209337 A1 beschreibt mehrlagige Verbundfolien die eine erhöhte Recyclingfähigkeit aufweisen und unter Verwendung von Polylactiden als Zwischenlage hergestellt werden. Der Einsatz von Polyolefinen als Folienlage wird nicht explizit beschrieben.

WO 2021/069668 A1 beschreibt eine recyclingfähige Verpackung auf Polyethylenbasis, es wird eine mögliche Verwendung von lösemittelfreien oder lösemittelhaltigen Klebstoffen auf Polyurethanbasis erwähnt, ohne dass auf die genaue Zusammensetzung des Klebstoffes eingegangen würde. Es wird nicht auf den Einfluss des Klebstoffes auf die Rezyklatqualität eingegangen.

WO 2019/027527 A1 beschreibt eine recyclingfähige Verpackung auf Polyethylenbasis bei der ein lösemittelhaltiger Polyurethanklebstoff mit Barriere-Eigenschaften eingesetzt wird. Es wird nicht auf den Einfluss des Klebstoffes auf die Rezyklatqualität eingegangen.

### Aufgabe der Erfindung

Die Aufgabe der vorliegenden Erfindung bestand demnach in der Bereitstellung eines Verfahrens zur Herstellung eines Monomaterials-Mehrschichtsystems, welches recyclefähig ist und nach dem Recyceln zu einem Rezyklat mit einer guten Qualität, insbesondere mit einer guten Homogenität führt. Des Weiteren sollten im Besonderen Klebstoffe für die Herstellung der Monomaterial-Mehrschichtsysteme zum Einsatz kommen, die sich gegebenenfalls mindestens zum Teil aus biobasierten Rohstoffen herstellen lassen und die zu einer guten Verbundfestigkeit der Monomaterial-Mehrschichtsysteme führen.

### Lösung der Aufgabe und detaillierte Beschreibung

Die Aufgabe wurde gelöst durch ein Verfahren zur Herstellung eines Monomaterial-Mehrschichtsystems, insbesondere eines recyclefähigen Monomaterial-Mehrschichtsystems, wobei das Verfahren die folgenden Schritte umfasst oder daraus besteht:
I) Bereitstellen von wenigstens zwei Monomaterial-Schichten;
II) Auftragen eines Klebstoffs, vorzugsweise eines Zweikomponentenklebstoffs, besonders bevorzugt eines wässrigen Zweikomponentenklebstoffs, mittelbar oder unmittelbar auf wenigstens eine der beiden bereitgestellten Monomaterial-Schichten, wobei der Klebstoff mindestens ein Polyurethan sowie mindestens einen Vernetzer umfasst;
III) Verbinden der Monomaterial-Schichten mittels des Klebstoffs sowie Aushärten des Klebstoffs unter Erhalt des Monomaterial-Mehrschichtsystems;
   **dadurch gekennzeichnet, dass**
   das Material der Monomaterial-Schichten Polyolefine umfasst und der Anteil des Polyolefins von 80,0 bis 99,3 Gew.-% beträgt, bezogen auf das Gesamtgewicht des Monomaterial-Mehrschichtsystems,
   der Anteil des ausgehärteten Klebstoffs 0,70 bis 20,0 Gew.-% beträgt, bezogen auf das Gesamtgewicht des Monomaterial-Mehrschichtsystems,
   das mindestens eine Polyurethan Fettsäureester enthält, welche eine Strukturformel R1-COO-R2 aufweisen, wobei
   R1 ein Alkyl- oder Alkenylrest mit einer Anzahl an Kohlenstoffatomen von 6 bis 24, bevorzugt von 8 bis 20, besonders bevorzugt von 10 bis 18 ist, und
   R2 ein hydroxyfunktioneller Alkylrest mit einer Anzahl an Kohlenstoffatomen von 1 bis 22, bevorzugt von 1 bis 14, besonders bevorzugt von 1 bis 8, ganz besonders bevorzugt von 1 bis 3 ist, und wobei
   der ausgehärtete Klebstoff einen Anteil von 2 bis 20 Gew.-%, bevorzugt 2,5 bis 19 Gew.-%, besonders bevorzugt 3 bis 16 Gew.-% an mindestens einer Fettsäureester-Einheit, bevorzugt Glycerolmonostearat, aufweist, bezogen auf das Gesamtgewicht des ausgehärteten Klebstoffs.

Wenn, wie in der bevorzugten Ausführungsform ein lösungsmittelhaltiger und / oder wässriger Klebstoff, insbesondere ein lösungsmittelhaltiger und / oder wässriger Zweikomponentenklebstoffs verwendet wird, umfasst Schritt II) auch ein Trocknen des aufgetragenen wässrigen Zweikomponentenklebstoffs.

Bevorzugt weist der Fettsäureester, der einen OH-funktionellen Baustein darstellt, ein 2,3-Dihydroxypropyloctadecanoat auf, im Folgenden auch Glycerolmonostearat genannt. Dieses 2,3-Dihydroxypropyloctadecanoat liegt entweder als Monomer, als Bestandteil eines Polyesters und/oder Polyethers oder in eingebauter Form in einem Polyester und/oder Polyether vor und wird mit einem oder mehreren Polyisocyanaten zu dem Polyurethan umgesetzt wird. Der Name Glycerolmonostearat setzt sich aus den beiden Bestandteilen, des 2,3-Dihydroxypropyloctadecanoat zusammen, wobei das 2,3-Dihydroxypropyl für das Glycerin-Gerüst, also das "Glycerol" steht und octadecanoat die Stearinsäure, auch Octadecansäure, also das "monostearat" repräsentiert.

Bevorzugt ist das Verfahren zur Herstellung eines Monomaterial-Mehrschichtsystems, insbesondere eines recyclefähigen Monomaterial-Mehrschichtsystems, wobei das Verfahren die folgenden Schritte umfasst oder daraus besteht:
I) Bereitstellen von wenigstens zwei Monomaterial-Schichten;
II) Auftragen eines wässrigen Zweikomponentenklebstoffs mittelbar oder unmittelbar auf wenigstens eine der beiden bereitgestellten Monomaterial-Schichten, wobei der wässrige Zweikomponentenklebstoff mindestens ein Polyurethan sowie mindestens einen Vernetzer umfasst und Trocknen des aufgetragenen wässrigen Zweikomponentenklebstoffs;
III) Verbinden der Monomaterial-Schichten mittels des getrockneten Zweikomponentenklebstoffs sowie Aushärten des getrockneten Zweikomponentenklebstoffs unter Erhalt des Monomaterial-Mehrschichtsystems;
**dadurch gekennzeichnet, dass**
das Material der Monomaterial-Schichten Polyolefine umfasst und der Anteil des Polyolefins von 80,0 bis 99,3 Gew.-% beträgt, bezogen auf das Gesamtgewicht des Monomaterial-Mehrschichtsystems,
der Anteil des ausgehärteten Zweikomponentenklebstoffs 0,70 bis 20,0 Gew.-% beträgt, bezogen auf das Gesamtgewicht des Monomaterial-Mehrschichtsystems,
das mindestens eine Polyurethan Fettsäureester-Einheiten umfasst, welche eine Strukturformel R1 - COO - R2 aufweisen, wobei
R1 ein Alkyl- oder Alkenylrest mit einer Anzahl an Kohlenstoffatomen von 6 bis 24 ist, bevorzugt von 8 bis 20, besonders bevorzugt von 10 bis 18 ist, und
R2 ein hydroxyfunktioneller Alkylrest mit einer Anzahl an Kohlenstoffatomen von 1 bis 22, bevorzugt von 1 bis 14, besonders bevorzugt von 1 bis 8, ganz besonders bevorzugt von 1 bis 3 ist,
   und wobei
der ausgehärtete Klebstoff einen Anteil von 2 bis 20 Gew.-% an Fettsäureester, bevorzugt Glycerolmonostearat, aufweist, bezogen auf das Gesamtgewicht des ausgehärteten Klebstoffs.

Im Zuge der Entwicklungsarbeiten, die zu der vorliegenden Erfindung geführt haben, wurde überraschenderweise festgestellt, dass der Einsatz eines spezifischen Klebstoffs bei der Herstellung eines Monomaterial-Mehrschichtsystems, welches hauptsächlich Polyolefine umfasst (80,0 bis 99,30 Gew.-%, bezogen auf das Gesamtgewicht des Monomaterial-Mehrschichtsystems), zu recyclefähigen Monomaterial-Mehrschichtsystemen führt, die insbesondere eine hohe Verbundfestigkeit aufweisen. Beim Recyceln dieser Monomaterial-Mehrschichtsysteme werden Rezyklate mit verbesserter Qualität erhalten, insbesondere mit einer guten Homogenität. Rezyklate eignen sich aufgrund ihrer guten Qualität daher für die weitere Verarbeitung, insbesondere für die Verarbeitung zu Formteilen.

Im Rahmen der vorliegenden Erfindung wird unter dem Begriff "recyclefähig" bzw. "Recyclefähigkeit" die Eignung eines Monomaterial-Mehrschichtsystems verstanden, sich mittels eines mechanischen Recyclingverfahrens zu einem Rezyklat mit hoher Homogenität verarbeiten zu lassen, selbst wenn das Monomaterial-Mehrschichtsystem einen Anteil von einem Klebstoff von > 1,0 Gew.-% aufweist, bezogen auf das Gesamtgewicht des Monomaterial-Mehrschichtsystems. Die Homogenität des Rezyklats wird ermittelt, in dem man das Monomaterial-Mehrschichtsystem bei hohen Temperaturen in einem Extruder kompoundiert und aus dem Extrudat durch Pressen einen Film mit einer Dicke von 200 µm herstellt. Dieser Film wird optisch mit einem Lichtmikroskop und gegebenenfalls unterstützt mit einem Auswertungsprogramm auf Inhomogenitäten untersucht. Ein Rezyklat mit hoher bzw. guter Homogenität zeichnet sich dadurch aus, dass die Anzahl der Fehlstellen pro untersuchter Fläche von 1,1 cm², die mit Hilfe einer mikroskopischen Untersuchung ermittelt werden (Lichtmikroskop) < 1000, bevorzugt < 500, besonders bevorzugt < 300 ist. In Bezug auf die Gesamtfläche der Fehlstellen ist ein homogenes Rezyklat gegeben, wenn die Gesamtfläche der Fehlstellen im gepressten Film, der aus dem erzeugten Rezyklat gepresst worden ist, < 3%, bevorzugt < 2%, noch bevorzugter < 0,5% beträgt. Abweichend davon kann die Homogenität an einem Film ermittelt werden, der hergestellt wird aus einem Extrudat, welches erhalten wird, in dem eine bestimmte Menge des zerkleinerten ausgehärteten Klebstoffes mit einer definierten Menge der weiteren Bestandteile des Monomaterialschichtsystems (alternativ: "die verwendeten Monomaterial-Schichten") bei hohen Temperaturen in einem Extruder kompoundiert und aus dem Extrudat durch Pressen einen Film herstellt. Diese Methode ist insbesondere geeignet dazu, den maximalen Klebstoffanteil zu ermitteln, bei dem noch ein recylingfähiges Monomaterial-Schichtsystem erhalten wird.

Die Verbundfestigkeit des Monomaterial-Mehrschichtsystems wird erfindungsgemäß im 180°-Schälversuch ermittelt (180°-Schälfestigkeit), in dem Verbundfolien in 15 mm breite Streifen zerschnitten werden. Anschließend werden die Streifen bei 23°C in einer Universalprüfmaschine für Schälfestigkeiten der Firma Zwick (Typ 5kN Allround Table-top BT2-FA005TH.A50.002) mit einer Geschwindigkeit von 100 mm/min bei einem Winkel von 2 × 90° (180°) abgezogen und die dabei erforderliche Kraft in Newton gemessen. Eine ausreichende Verbundfestigkeit ist gegeben, wenn ein Wert von mindestens 0,5 N/15mm erreicht wird.

Unter Monomaterial-Mehrschichtsystem wird bevorzugt ein Schichtsystem verstanden, das aus wenigstens zwei Monomaterial-Schichten und einem wässrigen Klebstoff hergestellt wird. Die Herstellung umfasst oder besteht aus folgenden Schritten:
I) Bereitstellen von wenigstens zwei Monomaterial-Schichten;
II) Auftragen eines Klebstoffs, vorzugsweise eines Zweikomponentenklebstoffs, besonders bevorzugt eines wässrigen Zweikomponentenklebstoffs, mittelbar oder unmittelbar auf wenigstens eine der beiden bereitgestellten Monomaterial-Schichten, wobei der Klebstoff mindestens ein Polyurethan sowie mindestens einen Vernetzer umfasst;
III) Verbinden der Monomaterial-Schichten mittels des Klebstoffs sowie Aushärten des Klebstoffs unter Erhalt des Monomaterial-Mehrschichtsystems.

Das "Auftragen" kann bedeuten, dass der Klebstoff auf die gesamte Oberfläche des Substrats oder nur auf einen oder mehrere Teile der Substratoberfläche aufgetragen wird.

Das "Auftragen" kann durch Streichen, Tauchen, Sprühen, Walzen, Rakeln, Fließen, Gießen, Drucken oder Transferdruck erfolgen, vorzugsweise durch Streichen, Tauchen oder Sprühen.

Wenn wie in der bevorzugten Ausführungsform ein lösungsmittelhaltiger und / oder wässriger Klebstoff, insbesondere ein lösungsmittelhaltiger und / oder wässriger Zweikomponentenklebstoffs verwendet wird, umfasst Schritt II) auch ein Trocknen des aufgetragenen wässrigen Zweikomponentenklebstoffs.

Durch das "Trocknen" werden leichtflüchtige Bestandteil aus dem lösungsmittelhaltigen und / oder wässrigen Klebstoff, insbesondere dem lösungsmittelhaltigen und/oder wässrigen Zweikomponentenklebstoff entfernt. Bei der flüchtigen Komponente kann es sich beispielsweise um Wasser oder ein organisches Lösemittel handeln. Leichtflüchtige Bestandteile sind chemische Verbindungen mit einem Siedepunkt von kleiner 200 °C bei einem Druck von 1013,25 hPa. Vorzugsweise sind nach dem Trocknen mindestens 80 Gew.-%, vorzugsweise 90 Gew.-%, besonders bevorzugt 95 Gew.-% der leichtflüchtigen Bestandteile aus dem Klebstofffilm entfernt worden, basierend auf der Gesamtmenge an leichtflüchtigen Bestandteilen in der Klebstoffformulierung vor der Trocknung.

Das "Trocknen" erfolgt vorzugsweise durch eine oder mehrere der folgenden Maßnahmen: Infrarot-Wärmestrahlung, Nah-Infrarot-Wärmestrahlung, Mikrowellen und Verwendung eines Konvektionsofens bei erhöhter Temperatur, sowie Aufblasen von Luft mit geringer relativer Luftfeuchte.

Unter "Aushärten" versteht man im Sinne dieser Erfindung einen Vorgang, der die Verbundfestigkeit des erhaltenen Monomaterial-Mehrschichtsystems nach dem Verbinden der Monomaterial-Schichten erhöht. Dies kann durch rein physikalische Vorgänge, wie zum Beispiel durch Abkühlen des Klebstoffes im Monomaterial-Mehrschichtsystem unter Modulzunahme erfolgen, durch eine Kristallisation eines Teiles des Polyurethans und/oder einer Kombination von verschiedenen physikalischen Effekten. Alternativ oder zusätzlich kann das Aushärten durch chemische Veränderung des Polyurethans beim Verbinden der Monomaterial-Schichten erfolgen, zum Beispiel durch die Reaktion von reaktiven Gruppen unter Ausbildung neuer kovalenter Bindungen, sei es zwischen reaktiven Gruppen innerhalb desselben oder eines anderen Polyurethans, oder durch die Reaktion einer reaktiven Gruppe im Polyurethan mit einer reaktiven Gruppe in einem Vernetzer.

Unter "hydroxyfunktionellem Alkylrest" wird gemäß der Erfindung verstanden, dass es sich sowohl um einen mono-funktionellen Alkylrest, also auch um multi-funktionelle Alkylreste handeln kann. Bevorzugt handelt es sich bei dem hydroxyfunktionellen Alkylrest R2 um einen mono-, di, oder trihydroxyfunktionellen Alkylrest.

Bevorzugt wird unter Monomaterial-Mehrschichtsystem ein Schichtsystem verstanden, das aus wenigstens zwei Monomaterial-Schichten und einem wässrigen Zweikomponentenklebstoff hergestellt wird. Die Herstellung umfasst oder besteht bevorzugt aus folgenden Schritten:
I) Bereitstellen von wenigstens zwei Monomaterial-Schichten;
II) Auftragen eines wässrigen Zweikomponentenklebstoffs mittelbar oder unmittelbar auf wenigstens eine der beiden bereitgestellten Monomaterial-Schichten, wobei der wässrige Zweikomponentenklebstoff mindestens ein Polyurethan sowie mindestens einen Vernetzer umfasst und Trocknen des aufgetragenen wässrigen Zweikomponentenklebstoffs;
III) Verbinden der Monomaterial-Schichten mittels des getrockneten Zweikomponentenklebstoffs sowie Aushärten des getrockneten Zweikomponentenklebstoffs unter Erhalt des Monomaterial-Mehrschichtsystems.

Das Material der Monomaterial-Schicht umfasst Polyolefine, wobei der Anteil des Polyolefins von 80,0 bis 99,30 Gew.-% beträgt, bevorzugt im Bereich von 95,0 bis 99,30 Gew.-%, besonders bevorzugt im Bereich von 95,0 bis 98,0 Gew.-%, bezogen auf das Gesamtgewicht des Monomaterial-Mehrschichtsystems. Dies sind vorzugsweise Polyolefin-Folien, welche darüber hinaus beschichtet sein können. Die Monomaterial-Schicht kann ferner dem Fachmann bekannte Zuschlagstoffe enthalten, insbesondere Antiblockmittel, Farbstoffe, Pigmente und Stabilisatoren. Die Monomaterial-Schichten, wie z.B. die Polyolefin-Folien, können durch verschiedene, dem Fachmann bekannte Verfahren, beispielsweise durch Blasfolienextrusion, hergestellt werden. Durch diese Verfahren können Monomaterial-Schichten aus mehreren Lagen unterschiedlicher oder gleicher Zusammensetzungen erhalten werden. Die Monomaterial-Schichten können zur Einstellung von gewünschten Eigenschaften optional unterhalb der Schmelztemperatur axial oder biaxial gestreckt und/oder mit einer Beschichtung beschichtet werden. Insbesondere kann eine Barriereschicht, beispielsweise aus Siliziumoxid, Aluminiumoxid, EVOH, PVOH oder Acrylaten und/oder eine Druckfarbe und/oder eine Primer aufgebracht werden.

Die wenigstens zwei Monomaterial-Schichten unterscheiden sich vorzugsweise hinsichtlich des Schmelzpunkts um 5 bis 90 °C, bevorzugt 30 bis 60 °C. Ferner ist es bevorzugt, dass eine Schicht der wenigstens zwei Monomaterial-Schichten einen Schmelzpunkt von 100 bis 135 °C, bevorzugt 100 bis 125 °C und die andere Schicht einen Schmelzpunkt von 130 bis 190 °C, bevorzugt 130 bis 165 °C aufweist. Es ist auch möglich, zur Herstellung eines Monomaterial-Mehrschichtsystems Polyolefine mit einem identischen oder nahezu identischen Schmelzpunkt einzusetzen, wenn auf mindestens einer Seite des Monomaterial-Mehrschichtsystems eine Siegelschicht vorhanden ist. Schmelzpunkt und Schmelztemperatur werden hier synonym verwendet. Die Schmelztemperaturen werden bestimmt mittels DSC (differential scanning calometry) bei einer Aufheizrate von 20 K/min gemäß DIN EN ISO 11357-1:2017 (2017-02) und Normteil 11357-2.

Es ist bevorzugt, dass das Polyolefin der Monomaterial-Schichten aus der Gruppe ausgewählt ist, umfassend oder bestehend aus Polyethylen, Polypropylen oder Mischungen davon. Die Polyolefine können beispielsweise aus Alkenen wie Ethylen, Propylen, 1-Buten und/oder Isobuten durch Kettenpolymerisation hergestellt werden. Bevorzugt werden als Monomere Ethylen und/oder Propylen bei der Herstellung der Polyolefine eingesetzt.

Bevorzugt eingesetzt werden Monomaterial-Schichten, die im Wesentlichen aus Polypropylen (beispielsweise BOPP (biaxially oriented polypropylene)) und/oder Polyethylen, (beispielsweise BOPE (biaxially oriented polyethylene)) bestehen. Ganz besonders bevorzugt werden Monomaterialschichten eingesetzt, die aus Polyethylen, insbesondere aus BOPE (biaxially oriented polyethylen), oder MDO-PE (machine direction orientation), bestehen. Vorzugsweise bestehen die Monomaterial-Schichtsysteme aus zwei Monomaterial-Schichten, die größtenteils aus Polyethylen aufgebaut sind oder aus zwei Monomaterial-Schichten, die größtenteils aus Polypropylen aufgebaut sind. In einer weiteren bevorzugten Ausführungsform bestehen die Monomaterial-Schichtsysteme jeweils aus einer Monomaterial-Schicht, die größtenteils aus Polyethylen aufgebaut ist und einer Monomaterial-Schicht, die größtenteils aus Polypropylen aufgebaut ist.

Der Klebstoff umfasst mindestens ein Polyurethan, sowie mindestens einen Vernetzer. Der Klebstoff ist vorzugsweise ein Zweikomponentenklebstoff, besonders bevorzugt ein wässriger Zweikomponentenklebstoff. Ein Zweikomponentenklebstoff bzw. ein wässriger Zweikomponentenklebstoff wird folgend auch 2K-Klebstoff oder 2K-Polyurethanklebstoff genannt. Der Anteil des ausgehärteten Klebstoffs beträgt 0,70 bis 20,0 Gew.-%, bevorzugt 0,70 bis 10,0 Gew.-%, weiter bevorzugt 1,0 bis 5,0 Gew.-%, bezogen auf das Gesamtgewicht des Monomaterial-Mehrschichtsystems.

Die Herstellung von Polyurethanklebstoffen, insbesondere 2K-Polyurethanklebstoffen, ist dem Fachmann grundsätzlich bekannt. Chemischer Aufbau und Formulierung sowie die Verarbeitung, insbesondere im Falle von 2K-Polyurethanklebstoffen zur Herstellung von Verbundfolien bzw. Mehrschichtverbundfolien sind in Ulrich Meier-Westhues, Polyurethane - Lacke, Kleb- und Dichtstoffe, Hannover: Vincenz Network 2007, Kapitel 6, bspw. auf Seiten 241-283 beschrieben.

Das mindestens eine Polyurethan des Klebstoffs enthält Fettsäureester-Einheiten mit der Strukturformel R1 - COO - R2 und der ausgehärtete Klebstoff weist einen Anteil von 2 bis 20 Gew.-%, bevorzugt 2,5 bis 19 Gew.-%, besonders bevorzugt 3 bis 16 Gew.- % an mindestens einer Fettsäureester-Einheit, bevorzugt Glycerolmonostearat, auf, bezogen auf das Gesamtgewicht des ausgehärteten Klebstoffs.

Das mindestens eine Polyurethan des Klebstoffs ist bevorzugt ein Polyurethanpolymer und weist mindestens eine Struktureinheit auf, welche sich aus der Reaktion mindestens einer Isocyanatgruppe mit einer der beiden in dem Fettsäureester, der die Fettsäureester-Einheiten bildet, vorhandenen Hydroxylgruppen unter Ausbildung mindestens einer Urethangruppe ableitet. Bevorzugt sind beide Hydroxylgruppen des Glycerolmonostearates über Urethangruppen in das Polyurethan eingebaut. Bevorzugte Isocyanate, die die entsprechenden Isocyanatgruppen zur Bildung der Urethangruppen des Polyurethans bereitstellen, werden an späterer Stelle noch erwähnt, insbesondere als Komponente (a) zur Bildung des Polyurethans.

Die Polyurethan-Komponente des Klebstoffs liegt vorzugsweise als wässrige Polyurethandispersion (PUD) vor. Die Herstellung von wässrigen Polyurethandispersionen ist dem Fachmann grundsätzlich bekannt.

Zur Herstellung der wässrigen Polyurethandispersionen können sämtliche, aus dem Stand der Technik bekannten Verfahren wie Emulgator-Scherkraft-, Aceton-, Prepolymer-Misch-, Schmelz-Emulgier-, Ketimin- und Feststoff-Spontan-Dispergier-Verfahren oder Abkömmlinge davon verwendet werden. Eine Zusammenfassung dieser Methoden findet sich in Methoden der organischen Chemie (Houben-Weyl, Erweiterungs- und Folgebände zur 4. Auflage, Band E20, H. Bartl und J. Falbe, Stuttgart, New York, Thieme 1987, Seiten 1671 bis 1682. Erfindungsgemäß bevorzugt sind das Schmelz-Emulgier-, Prepolymer-Misch- und das Aceton-Verfahren. Besonders bevorzugt ist das Aceton-Verfahren. Die Anwendung und Durchführung des Aceton-Verfahrens ist Stand der Technik und dem Fachmann beispielsweise aus DE-A 1570 602, DE-A 1570 615 und DE-A 1694 062, EP-A 0 232 778 bekannt. Das Acetonverfahren hat gegenüber den anderen Verfahren den Vorteil, dass die Dispersionen weitgehend lösemittelfrei bereitgestellt werden können. Außerdem sind mit dem Acetonverfahren Polyurethane mit höherem Molekulargewicht, niedrigerer Hydrophilie und engerer Molekulargewichtsverteilung möglich. Diese Merkmale sind insbesondere vorteilhaft, wenn das Polyurethan als Klebstoff Verwendung findet. Ganz besonders bevorzugt ist Herstellung der wässrigen Dispersion nach dem modifizierten Acetonverfahren, wie es in EP 2 558 511 beschrieben ist. Dieses Verfahren erlaubt die besonders wirtschaftliche und damit besonders ressourcenschonende Herstellung der wässrigen Dispersionen mit wenigstens einem Polyurethan.

Das mindestens eine Polyurethan kann in dem erfindungsgemäßen Klebstoff im Allgemeinen in jeder dem Fachmann als geeignet erscheinenden Konzentration oder Menge vorliegen. Bevorzugt liegt das mindestens eine Polyurethan, im Fall, dass der Klebstoff ein wässriger Zweikomponentenklebstoff ist, in einer Menge von 5 bis 64 Gew.-%, besonders bevorzugt 30 bis 60 Gew.-%, ganz besonders bevorzugt 40 bis 50 Gew.-%, jeweils bezogen auf die Gesamtmasse des wässrigen Zweikomponentenklebstoff, vor.

Erfindungsgemäß wird unter "wässrigen Dispersionen enthaltend mindestens ein Polyurethan" oder wässrige Polyurethandispersion eine wässrige Dispersion enthaltend Polyurethan-Polymere und/oder Polyurethan-PolyharnstoffPolymere verstanden.

In einer bevorzugten Ausführungsform des Verfahrens ist das mindestens eine Polyurethan erhältlich, oder wird erhalten durch die Umsetzung der folgenden Komponenten:
(a) mindestens einem Di- und/oder Polyisocyanat,
(b) mindestens einem Diol- und/oder Polyol, welches mindestens eine Fettsäureester-Einheit, aufweist und die Komponente (b) insbesondere ein Glycerolmonostearat und verschieden von Komponenten (a), (c), (d), (e) und (f) ist,
(c) gegebenenfalls mindestens einem weiteren Diol- und/oder Polyol, wobei die Komponente (c) verschieden von Komponenten (a), (b), (d), (e) und (f) ist,
(d) mindestens eine hydrophilierende Gruppe aufweisende Komponente, wobei die Komponente (d) verschieden von Komponenten (a), (b), (c), (e) und (f) ist,
(e) gegebenenfalls mono-, di-, und/oder tri-aminofunktionelle und/oder hydroxyamino-funktionelle Verbindungen, wobei die Komponente (e) verschieden von Komponenten (a), (b), (c), (d) und (f) ist und
(f) gegebenenfalls sonstige isocyanatreaktive Verbindungen, wobei die Komponente (f) verschieden von Komponenten (a), (b), (c), (d) und (e) ist.

Als Komponenten (a) sind beliebige organische Verbindungen geeignet, die mindestens zwei freie Isocyanatgruppen pro Molekül aufweisen und somit die Isocyanatgruppen zur Bildung der Urethangruppen des Polyurethans beitragen. Bevorzugt werden Diisocyanate der allgemeinen Formel Y(NCO)₂ eingesetzt, wobei Y für einen zweiwertigen aliphatischen Kohlenwasserstoffrest mit 4 bis 12 Kohlenstoffatomen, einen zweiwertigen cycloaliphatischen Kohlenwasserstoffrest mit 6 bis 15 Kohlenstoffatomen, einen zweiwertigen aromatischen Kohlenwasserstoffrest mit 6 bis 15 Kohlenstoffatomen oder einen zweiwertigen araliphatischen Kohlenwasserstoffrest mit 7 bis 15 Kohlenstoffatomen steht.

Beispiele derartiger bevorzugt einzusetzender Diisocyanate sind Tetramethylendiisocyanat, Methylpentamethylendiisocyanat, Pentamethylendiisocyanat, Hexamethylendiisocyanat, Dodecamethylendiisocyanat, 1,4-Diisocyanato-cyclohexan, 1-Isocyanato-3,3,5-trimethyl-5-isocyanatomethyl-cyclohexan (Isophorondiisocyanat; IPDI), 4,4'-Diisocyanato-dicyclohexylmethan, 4,4'-Diisocyanato-dicyclohexylpropan-(2,2), 1,4-Di-isocyanatobenzol, 2,4-Diisocyanatotoluol, 2,6-Diisocyanatotoluol, 4,4'-Diisocyanato-diphenylmethan, 2,2'- und 2,4'-Diisocyanatodiphenylmethan, Tetramethylxylylendiisocyanat, p-Xylylendiisocyanat, p-Isopropylidendiisocyanat sowie aus diesen Verbindungen bestehende Gemische von mindestens zwei hiervon.

Neben diesen einfachen Diisocyanaten sind auch solche Polyisocyanate geeignet, die Heteroatome in dem die Isocyanatgruppen verknüpfenden Rest enthalten und/oder eine Funktionalität von mehr als 2 Isocyanatgruppen pro Molekül besitzen. Erstere sind beispielsweise durch Modifizierung einfacher aliphatischer, cycloaliphatischer, araliphatischer und/oder aromatischer Diisocyanate hergestellte, aus mindestens zwei Diisocyanaten aufgebaute Polyisocyanate mit Uretdion-, Isocyanurat-, Urethan-, Allophanat-, Biuret-, Carbodiimid-, Imino-oxadiazindion- und/oder Oxadiazintrionstruktur. Als Beispiel für ein nicht-modifiziertes Polyisocyanat mit mehr als 2 Isocyanatgruppen pro Molekül sei beispielsweise 4-iso-Cyanatomethyl-1,8-octandiisocyanat (Nonantriisocyanat) genannt.

Bevorzugte Diisocyanate (a) sind Pentamethylendiisocyanat, Methylpentamethylendiisocyanat, Hexamethylendiisocyanat, Dodecamethylendiisocyanat, 1,4-Diisocyanato-cyclohexan, 1-Isocyanato-3,3,5-trimethyl-5-isocyanatomethyl-cyclohexan, 4,4'-Diisocyanato-dicyclohexylmethan, 1,3- und 1,4-Bis-(isocyanatomethyl)benzol, 1,3- und 1,4-Bis(1-isocyanato-1-methylethyl)-benzol, Bis(4-(1 -isocyanato-1 -methylethyl)phenyl)-carbonat, 4,4'-Diisocyanato-dicyclohexylpropan-(2,2), 1,4-Diisocyanatobenzol, 2,4-Diisocyanatotoluol, 2,6-Diisocyanatotoluol, 4,4'-Diisocyanato-diphenylmethan, 2,2'- und 2,4'-Diiso-cyanatodiphenylmethan, Tetramethylxylylendiisocyanat, p-Xylylendiisocyanat, p-Isopropylidendiisocyanat, sowie aus diesen Verbindungen bestehende Gemische.

In einer bevorzugten Ausführungsform des Verfahrens ist das mindestens eine Di- und/oder Polyisocyanat (a) ausgewählt aus der Gruppe bestehend aus Hexamethylen-1,6-diisocyanat, Pentamethylen-1,5-diisocyanat, 1,4-Butandiisocyanat, Isophorondiisocyanat, Toluol-2,4-diisocyanat, Toluol-2,6-diisocyanat, Diphenylmethan-2,2'-diisocyanat, Diphenylmethan-2,4'-diisocyanat, Diphenylmethan-4,4'-diisocyanat oder Mischungen von mindestens 2 davon.

Komponente (a) ist in dem erfindungsgemäß eingesetzten Polyurethan in einer Menge von im Allgemeinen 5 bis 60 Gew.-%, bevorzugt 6 bis 45 Gew.-%, und besonders bevorzugt 7 bis 25 Gew.-%, enthalten, wobei die Summe der vorhandenen Komponenten (a), (b), gegebenenfalls (c), (d), gegebenenfalls (e) und gegebenenfalls (f) jeweils 100 Gew.-% ergibt.

Als Komponenten (b) sind Diole und/oder Polyole geeignet, welche mindestens eine Fettsäureester-Einheit enthalten, wobei die Komponente (b) verschieden von Komponenten (a), (c), (d), (e) und (f) ist. Diese Diole und/oder Polyole sind Verbindungen mit mindestens zwei gegenüber Isocyanaten reaktionsfähigen Wasserstoffatomen.

In einer bevorzugten Ausführungsform des Verfahrens weisen die Fettsäure-Einheiten mindestens ein Glycerolmonostearat auf, welches ausgewählt ist aus der Gruppe bestehend aus der α-Monoglycerid-Form des Glycerolmonostearats, der β-Monoglycerid-Form des Glycerolmonostearats, Mischungen aus beiden, sowie deren isomere, hydratisierte oder solvatisierte Formen, einschließlich racemischer und Enantiomeren reiner Varianten.

Bevorzugt ist die mindestens eine Fettsäureester-Einheit der Komponente (b), ausgewählt aus der Gruppe bestehend aus Fettsäureester-Einheiten, mit der Strukturformel R1-COO-R2, wobei
- R1 der Alkyl- oder Alkenylrest der Fettsäure ist mit einer Anzahl an Kohlenstoffatomen zwischen 6 und 24 und
- R2 der hydroxyfunkionelle Alkylrest des Alkohols ist mit einer Anzahl an Kohlenstoffatomen zwischen 1 und 22 und
- COO- Gruppe die Esterbindung zwischen der Fettsäure und dem Alkohol repräsentiert.

Der Alkyl- oder Alkenylrest der Fettsäure R1 ist bevorzugt ausgewählt aus der Gruppe bestehend aus Laurinsäure, Palmitinsäure, Stearinsäure, Ölsäure, Arachinsäure und Beheninsäure oder Mischungen aus mindestens zwei davon. Der Alkylrest des hydroxyfunktionellen Alkylrests R2 des Alkohols eine Methanol, eine Ethanol, eine Propanol, eine Ethylenglycol, eine Butandiol, eine Glycerin, eine Pentantriol und eine Sorbit Gruppe aufweist. Der Fettsäureester weist vorzugsweise ein mittleres Molekulargewicht Mw im Bereich von 50 bis 4000 g/mol, vorzugsweise 100 bis 2000 g/mol, besonders bevorzugt 200 bis 1000 g/mol auf, bestimmt gemäß DIN EN ISO 13885-1:2021-11 mit Tetrahydrofuran (THF) als Eluent gegen einen Polystyrolstandard.

In einer besonderen Ausführungsform des Fettsäureesters wird Glycerolmonostearat als OH-funktionellen Baustein, der entweder als Monomer, als Bestandteil eines Polyesters und/oder Polyethers oder in eingebauter Form in einem Polyester und/oder Polyether vorliegt und mit einem oder mehreren Polyisocyanaten zu einem Polyurethan umgesetzt wird eingesetzt.

Das hier beschriebenen Glycerolmonostearat umfasst eine oder mehrere der folgenden Strukturen: die α-Monoglycerid-Form, die β-Monoglycerid-Form, Mischungen aus beiden, sowie deren isomere, hydratisierte oder solvatisierte Formen, einschließlich racemischer und enantiomerenreiner Varianten. Die α- und β-Formen beziehen sich darauf, an welcher Hydroxylgruppe des Glycerins die Stearinsäure verestert ist. Bei dem α-Glycerolmonostearat ist die Stearinsäure an der primären Hydroxylgruppe (Position 1 oder 3) des Glycerins gebunden. Bei dem β-Glycerolmonostearat ist die Stearinsäure an der sekundären Hydroxylgruppe (Position 2) des Glycerins gebunden.

Komponente (b) ist in dem erfindungsgemäß eingesetzten Polyurethan in einer Menge von 2 bis 60 Gew.-%, bevorzugt 2 bis 40 Gew.-%, und besonders bevorzugt 2 bis 20 Gew.-%, enthalten, wobei die Summe der vorhandenen Komponenten (a), (b), gegebenenfalls (c), (d), gegebenenfalls (e) und gegebenenfalls (f) jeweils 100 Gew.-% ergibt.

Geeignete Diol- und/oder Polyolkomponenten (c) sind Verbindungen mit mindestens zwei gegenüber Isocyanaten reaktionsfähigen Wasserstoffatomen und einem mittleren Molekulargewicht von bevorzugt 62 bis 18000 g/mol, besonders bevorzugt 62 bis 4000 g/mol, bestimmt gemäß DIN EN ISO 13885-1:2021-11 mit Tetrahydrofuran (THF) als Eluent gegen einen Polystyrolstandard. Die Komponente (c) ist verschieden von Komponenten (a), (b), (d), (e) und (f).

Beispiele für geeignete Aufbaukomponenten (c) sind Polyetherpolyole Polyesterpolyole, Polycarbonatpolyole, Polylactone und Polyamide. Bevorzugte Polyole (c) weisen bevorzugt 2 bis 4, besonders bevorzugt 2 bis 3 Hydroxylgruppen, ganz besonders bevorzugt 2 Hydroxylgruppen, auf. Auch Gemische verschiedener derartiger Verbindungen kommen in Frage. Das vorliegende mindestens eine Polyurethan enthält als optionale Komponente (c) bevorzugt ein oder mehrere Polyesterpolyole und/oder ein oder mehrere Polyetherpolyole und/oder ein oder mehrere Polycarbonatpolyole.

Als Polyesterpolyole kommen insbesondere lineare Polyesterdiole oder auch schwach verzweigte Polyesterpolyole in Betracht, wie sie in bekannter Weise aus aliphatischen, cycloaliphatischen oder aromatischen Di- oder Polycarbonsäuren, beispielsweise Bernstein-, Methylbernstein-, Glutar-, Adipin-, Pimelin-, Kork-, Azelain-, Sebacin-, Nonandicarbon-, Decandicarbon-, Terephthal-, iso-Phthal-, o-Phthal-, Tetrahydrophthal-, Hexahydrophthal-, Cyclohexandicarbon-, Malein-, Fumar-, Malon- oder Trimellitsäure, sowie Säureanhydriden, beispielsweise o-Phthal-, Trimellit- oder Bernsteinsäureanhydrid oder deren Gemische mit mehrwertigen Alkoholen, beispielsweise Ethandiol, Di-, Tri-, Tetraethylenglykol, 1,2-Propandiol, Di-, Tri-, Tetrapropylenglykol, 1,3-Propandiol, Butandiol-1,4, Butandiol-1,3, Butandiol-2,3, Pentandiol-1,5, Hexandiol-1,6, 2,2-Dimethyl-1,3-propandiol, 1,4-Dihydroxycyclohexan, 1,4-Dimethylolcyclohexan, Octandiol-1,8, Decandiol-1,10, Dodecandiol-1,12 oder deren Gemische, gegebenenfalls unter Mitverwendung höherfunktioneller Polyole, beispielsweise Trimethylolpropan, Glycerin oder Pentaerythrit, hergestellt werden können. Als mehrwertige Alkohole zur Herstellung der Polyesterpolyole kommen natürlich auch cycloaliphatische und/oder aromatische Di- und Polyhydroxylverbindungen in Frage. Anstelle der freien Polycarbonsäure können auch die entsprechenden Polycarbonsäureanhydride oder entsprechende Polycarbonsäureester von niedrigen Alkoholen oder deren Gemische zur Herstellung der Polyester verwendet werden.

Bei den Polyesterpolyolen kann es sich auch um Homo- oder Mischpolymerisate von Lactonen handeln, die bevorzugt durch Anlagerung von Lactonen oder Lactongemischen, wie Butyrolacton, ε-Caprolacton und/oder Methyl-ε-caprolacton an geeignete di- und/oder höherfunktionelle Startermoleküle, beispielsweise die vorstehend als Aufbaukomponenten für Polyesterpolyole genannten niedermolekularen, mehrwertigen Alkohole erhalten werden. Die entsprechenden Polymerisate des ε-Caprolactons sind bevorzugt.

Auch Hydroxylgruppen aufweisende Polycarbonate kommen als Komponente (c) in Betracht, beispielsweise solche, die durch Umsetzung von Diolen wie 1,4-Butandiol und/oder 1,6-Hexandiol mit Diarylcarbonaten, beispielsweise Diphenylcarbonat, Dialkylcarbonaten, beispielsweise Dimethylcarbonat oder Phosgen hergestellt werden können. Durch die zumindest teilweise Verwendung von Hydroxylgruppen aufweisenden Polycarbonaten kann die Hydrolysebeständigkeit des Klebstoffs, insbesondere des wässrigen Zweikomponentenklebstoffs, verbessert werden.

Als Polyetherpolyole geeignet sind beispielsweise die Polyadditionsprodukte der Styroloxide, des Ethylenoxids, Propylenoxids, Tetrahydrofurans, Butylenoxids, Epichlorhydrins, sowie ihre Mischadditions- und Pfropfprodukte, sowie die durch Kondensation von mehrwertigen Alkoholen oder Mischungen derselben und die durch Alkoxylierung von mehrwertigen Alkoholen, Aminen und Aminoalkoholen gewonnenen Polyetherpolyole. Die Polyetherpolyole der Komponente (c) sind unterschiedlich zu der Polyolkomponente (b), welche Fettsäureester-Einheiten aufweisen.

Als Aufbaukomponenten (c) insbesondere geeignete Polyetherpolyole sind die Homo-, Misch- und Pfropfpolymerisate des Propylenoxids, des Ethylenoxids, welche durch Anlagerung der genannten Epoxide an niedermolekulare Di- oder Triole, wie sie oben als Aufbaukomponenten für Polyesterpolyole genannte werden oder an höherfunktionelle niedermolekulare Polyole, beispielsweise Pentaerythrit oder Zucker oder an Wasser zugänglich sind.

Ebenfalls geeignete Komponenten (c) sind niedermolekulare Diole, Triole und/oder Tetraole, beispielsweise Ethandiol, Di-, Tri-, Tetraethylenglykol, 1,2-Propandiol, Di-, Tri-, Tetrapropylenglykol, 1,3-Propandiol, Butandiol-1,4, Butandiol-1,3, Butandiol-2,3, Pentandiol-1,5, Hexandiol-1,6, 2,2-Dimethyl-1,3-propandiol, 1,4-Dihydroxycyclohexan, 1,4-Dimethylolcyclohexan, Octandiol-1,8, Decandiol-1,10, Dodecandiol-1,12, Neopentylglykol, 1,4-Cyclohexandiol, 1,4-Cyclohexan-dimethanol, 1,4-, 1,3-, 1,2-Dihydroxybenzol oder 2,2-Bis-(4-hydroxyphenyl)-propan (Bisphenol A), TCD-Diol, Trimethylolpropan, Glycerin, Pentaerythrit, Dipenthaerytrit oder deren Gemische, gegebenenfalls unter Mitverwendung weiterer nicht genannter Diole bzw. Triole.

Als Polyole können auch Umsetzungsprodukte der genannten Polyole, insbesondere der niedermolekularen Polyole, mit Ethylen- und/oder Propylenoxid eingesetzt werden.

Die niedermolekularen Komponenten (c) haben bevorzugt ein Molekulargewicht von 62 bis 400 g/mol und werden weiter bevorzugt in Kombination mit den oben beschriebenen Polyesterpolyolen, Polylactonen, Polyetherpolyolen und/oder Polycarbonatpolyolen eingesetzt.

Die Polyolkomponente (c) ist in dem erfindungsgemäßen Polyurethan bevorzugt zu 0 bis 60 Gew.-%, besonders bevorzugt zu 0,1 bis 50 Gew.-%, und ganz besonders bevorzugt zu 0,5 bis 40 Gew.-%, enthalten, wobei die Summe der vorhandenen Komponenten (a), (b), gegebenenfalls (c), (d), gegebenenfalls (e) und gegebenenfalls (f) jeweils 100 Gew.-% ergibt.

In einer bevorzugten Ausführungsform des Verfahrens ist das mindestens eine Diol- und/oder Polyol der Komponente (c), ausgewählt aus der Gruppe bestehend aus Polyetherpolyol, Polyesterpolyol, Polycarbonatpolyol, Polylacton, Polyamide und / oder einer Mischung von mindestens zwei davon, und weist vorzugsweise ein mittleres Molekulargewicht Mw im Bereich von 62 bis 18000 g/mol, vorzugsweise 62 bis 8000 g/mol, besonders bevorzugt 62 bis 4000 g/mol auf, bestimmt gemäß DIN EN ISO 13885-1:2021-11 mit Tetrahydrofuran (THF) als Eluent gegen einen Polystyrolstandard.

Komponente (d) ist mindestens eine hydrophilierende Gruppe aufweisende Komponente, wobei die Komponente (d) verschieden von Komponenten (a), (b), (c), (e) und (f) ist.

Geeignete Komponenten (d) sind beispielsweise Sulphonat- oder Carboxylatgruppen enthaltende Komponenten, beispielsweise Diaminoverbindungen bzw. Dihydroxyverbindungen, die zusätzlich Sulfonat- und/oder Carboxylatgruppen tragen, beispielsweise die Natrium-, Lithium-, Kalium-, tert.-Amin-Salze der N-(2-Aminoethyl)-2-aminoethansulfonsäure, der N-(3-Aminopropyl)-2-aminoethansulfonsäure, der N-(3-Aminoproyl)-3-aminopropansulfonsäure, der N-(2-Aminoethyl)-3-aminopropansulphonsäure, der analogen Carbonsäuren, der Dimethylolpropionsäure, der Dimethylolbuttersäure, der Umsetzungsprodukte im Sinne einer Michaeladdition von 1 mol Diamin, beispielsweise 1,2-Ethandiamin oder Isophorondiamin, mit 2 mol Acrylsäure oder Maleinsäure.

Die Säuren werden bevorzugt direkt in Ihrer Salzform als Sulphonat bzw. Carboxylat eingesetzt. Es ist jedoch auch möglich, die zur Salzbildung notwendigen Neutralisationsmittel anteilig oder vollständig erst während oder nach der Herstellung der Polyurethane zuzugeben.

Für die Salzbildung besonders gut geeignete und bevorzugte tert. Amine sind beispielsweise Triethylamin, Dimethylcyclohexylamin und/oder Ethyldiisopropylamin. Es können auch andere Amine zur Salzbildung eingesetzt werden, beispielsweise Ammoniak, Diethanolamin, Triethanolamin, Dimethylethanolamin, Methydiethanolamin, Aminomethylpropanol und auch Mischungen der genannten und auch anderer Amine. Sinnvollerweise werden diese Amine erst nach Bildung des Prepolymers zugegeben.

Es ist auch möglich andere Neutralisationsmittel, beispielsweise Natrium-, Kalium-, Lithium, Calciumhydroxid, für Neutralisationszwecke einzusetzen.

Weitere geeignete Komponenten (d) sind nichtionisch hydrophilierend wirkende, mono- oder difunktionelle Polyether auf Basis von auf Alkoholen oder Aminen gestarteten Ethylenoxid-Polymeren oder Ethylenoxid/Propylenoxid-Copolymeren, beispielsweise Polyether LB 25 (Covestro Deutschland AG, Leverkusen, Deutschland) oder MPEG 750, d.h. Methoxypolyethylenglykol mit einem Molekulargewicht von 750 g/mol, beispielsweise unter dem Markennamen Pluriol^{®} 750 der BASF SE, Deutschland, erhältlich.

Bevorzugte Komponenten (d) sind N-(2-Aminoethyl)-2-aminoethansulfonat, N-(2-Aminoethyl)-2-aminoethancarboxylat und die Salze der Dimethylolpropionsäure und der Dimethylolbuttersäure.

Komponente (d) ist in dem erfindungsgemäßen Polyurethan bevorzugt in einer Menge von 0,1 bis 25 Gew.-%, besonders bevorzugt 0,5 bis 20 Gew.-%, ganz besonders bevorzugt 0,8 bis 15 Gew.-%, enthalten, wobei die Summe der vorhandenen Komponenten (a), (b), gegebenenfalls (c), (d), gegebenenfalls (e) und gegebenenfalls (f) jeweils 100 Gew.-% ergibt.

Als optionale Komponente (e) eignen sich mono-, di-, und/oder tri-aminofunktionelle und/oder hydroxyamino-funktionelle Verbindungen, wobei die Komponente (e) verschieden von Komponenten (a), (b), (c), (d) und (f) ist.

Erfindungsgemäß geeignete Komponenten (e) sind mono-, di-, trifunktionelle Amine und/oder mono-, di-, trifunktionelle Hydroxyamine, beispielsweise aliphatische und/oder alicyclische primäre und/oder sekundäre Monoamine, beispielsweise Ethylamin, Diethylamin, die isomeren Propyl- und Butylamine, höhere linearaliphatische Monoamine und cycloaliphatische Monoamine, beispielsweise Cyclohexylamin. Weitere Beispiele sind Aminoalkohole, d. h. Verbindungen, die in einem Molekül Amino- und Hydroxylgruppen enthalten, beispielsweise Ethanolamin, N-Methylethanolamin, Diethanolamin, Diisopropanolamin, 1,3-Diamino-2-propanol, N-(2-Hydroxyethyl)-ethylendiamin, N,N-Bis(2-Hydroxyethyl)-ethylendiamin und 2-Propanolamin.

Weitere Beispiele sind Diamine und Triamine, beispielsweise 1,2-Ethandiamin, 1,6-Hexamethylendiamin, 1-Amino-3,3,5-trimethyl-5-aminomethyl-cyclohexan (Isophorondiamin), Piperazin, 1,4-Diaminocyclohexan, Bis-(4-aminocyclohexyl)-methan und Diethylentriamin. Weiterhin kommen Adipinsäuredihydrazid, Hydrazin bzw. Hydrazinhydrat in Frage.

Selbstverständlich können auch Mischungen mehrerer der genannten, ggf. auch zusammen mit nicht genannten Verbindungen (e) eingesetzt werden.

Bevorzugte Komponenten (e) sind 1,2-Ethandiamin, 1-Amino-3,3,5-trimethyl-5-aminomethyl-cyclohexan, Diethylentriamin, Diethanolamin, Ethanolamin, N-(2-Hydroxyethyl)-ethylendiamin und N,N-Bis(2-Hydroxyethyl)-ethylendiamin.

Komponenten (e) dienen als di- oder trifunktionelle Kettenverlängerungsmittel bevorzugt dazu, höhere Molekulargewichte aufzubauen oder als monofunktionelle Verbindungen, Molekulargewichte zu begrenzen und/oder ggf. zusätzlich weitere reaktive Gruppen, wie z.B. freie Hydroxylgruppen, einzubauen. Wenn auf den Einsatz der (Poly)amine verzichtet wird, entstehen als Polymere reine Polyurethane, die weiter bevorzugt keine Harnstoffgruppen enthalten.

Komponente (e) ist in dem erfindungsgemäßen Polyurethan bevorzugt in einer Menge von 0 bis 10 Gew.-%, besonders bevorzugt 0 bis 5 Gew.-%, und ganz besonders bevorzugt 0 bis 3 Gew.-%, enthalten, wobei die Summe der vorhandenen Komponenten (a), (b), gegebenenfalls (c), (d), gegebenenfalls (e) und gegebenenfalls (f) jeweils 100 Gew.-% ergibt.

Als optionale Komponente (f) eigenen sich sonstige isocyanatreaktive Verbindungen, wobei die Komponente (f) verschieden von Komponenten (a), (b), (c), (d) und (e) ist.

Die erfindungsgemäß ggf. mit zu verwendende Komponenten (f) können beispielsweise aliphatische, cycloaliphatische oder aromatische Monoalkohole mit 2 bis 22 C-Atomen, beispielsweise Ethanol, Butanol, Hexanol, Cyclohexanol, Isobutanol, Benzylalkohol, Stearylalkohol, 2-Ethylethanol, und für Isocyanatgruppen gebräuchliche, unter erhöhten Temperaturen wieder abspaltbare Blockierungsmittel, beispielsweise Butanonoxim, Dimethylpyrazol, Caprolactam, Malonester, Triazol, Dimethyltriazol, tert.-Butyl-benzylamin, Cyclopentanoncarboxyethylester, sein.

Komponenten (f) können in dem erfindungsgemäßen Polyurethan bevorzugt in einer Menge von 0 bis 20 Gew.-%, besonders bevorzugt von 0 bis 10 Gew.-% und ganz besonders bevorzugt von 0 bis 8 Gew.-% enthalten sein, wobei die Summe der vorhandenen Komponenten (a), (b), gegebenenfalls (c), (d), gegebenenfalls (e) und gegebenenfalls (f) jeweils 100 Gew.-% ergibt.

Die Mitverwendung von Komponente (f) kann beispielsweise zu erfindungsgemäßen PolyurethanDispersionen führen, die weitere reaktive Gruppen enthalten, was beispielsweise die Anwendung verschiedener Vernetzungsmechanismen, beispielsweise Dual Cure, ermöglicht, um spezielle Eigenschaften, beispielsweise eine zweistufige, ggf. zeitlich versetzte, Aushärtung oder besonders hohe Vernetzungsdichte zu erzielen.

Zur Beschleunigung der Reaktion der Isocyanatgruppen der Di- und Polyisocyanate (a) mit den Isocyanat-reaktiven Komponenten (b), gegebenenfalls (c), (d), gegebenenfalls (e), und gegebenenfalls (f) können die in der Polyurethan-Chemie bekannten Katalysatoren eingesetzt werden Beispiele für geeignete Katalysatoren werden im Kapitel XII. Summery of Catalytic Effects High Polymers Vol. XVI Polyurethanes: Chemistry and Technology, Part 1. Chemistry J.H. Sauders and K.C. Frisch, John Wiley & Sons (Library of Congress Catalog Card Number 62-18932) aufgeführt. Geeignet ist z.B. Dibutylzinndilaurat (DBTL), Dibutylzinnoxid, Triethylamin, Zinn(II)-octoat, 1,4-Diazabicyclo[2,2,2]octan (DABCO), 1,4-Diaza-bicyclo[3,2,0]-5-nonen (DBN), 1,4-Diaza-bicyclo[5,4,0]-7-undecen (DBU), Bismutcarboxylate, N,N-Dimethylisopropanolamin, N-Methyl-diethanolamin, Triethanolamin, N,N-Dimethylethanolamin oder N-methyldiisopropanolamin. Bevorzugt ist Dibutylzinndilaurat.

Das mindestens eine Polyurethan des Klebstoffs kann unter Mitverwendung von wenigstens einem Vernetzer verarbeitet werden. Bei Mitverwendung von Vernetzern werden in der Regel Klebstoffschichten mit höherer Chemikalien-, Hydrolyse- und Temperatur-Beständigkeiten erzeugt.

Für ein wirksames Klebeverfahren muss das Polyurethan des Klebstoffs die Substratoberflächen der zu verklebenden Substrate ausreichend gut benetzen. Um diese Anforderung in einem Klebeprozess zu erfüllen, kann nur weitgehend lineares, fließfähiges Polyurethan verwendet werden. An die fertige Klebeverbindung werden jedoch weitere Anforderungen wie z.B. einer hohen Wärmebeständigkeit, gute Hydrolysebeständigkeit und gute Beständigkeit gegen Öle, Weichmacher etc. gestellt, die nur von einem vernetzten weniger fließfähigen Polyurethan erfüllt werden können. Um diese widersprüchlichen Anforderungen erfüllen zu können, müssen die Polymerketten des Polyurethans während oder nach dem Fügeprozess chemisch vernetzt werden. Mit zunehmender Anzahl der chemischen Verknüpfungen zwischen den Polymerketten verdichtet sich das Polymernetzwerk und die Vernetzungsdichte nimmt zu. Als Folge verliert das Polymer seine Fließfähigkeit. Dies führt zu einem höheren Zugmodul und geringeren Fließeigenschaften. Die Vernetzung erhöht die Erweichungstemperatur des Klebstofffilms und verbessert die Beständigkeit gegen Lösungsmittel, Weichmacher, Öl- und Fettmigration und Hydrolyse.

Vernetzer für Polyurethan können alle Verbindungen mit wenigstens zwei reaktiven Gruppen sein, die mit reaktiven Gruppen an der Polymerkette des Polyurethanpolymers und/oder mit im Polyurethanpolymer vorhandenen reaktiven Gruppen reagieren können. Beispiele für reaktive Gruppen in der Polymerkette des Polyurethanpolymers sind in erster Linie Hydroxyl-, Carboxyl-, Urethan- oder Harnstoffgruppen.

Der Vernetzer kann vorzugsweise hydrophil modifiziert sein. Besonders bevorzugt ist der Vernetzer mit ionischen oder nicht-ionischen Gruppen, ganz besonders bevorzugt mit Sulphonat- oder Carboxylatgruppen und/ oder mono- oder difunktionellen Polyethergruppen, noch bevorzugter mit Sulphonatgruppen hydrophil modifiziert. In einer anderen bevorzugten Ausführungsform ist der Vernetzer nicht modifiziert.

Geeignete Vernetzer sind beispielsweise organische Polyisocyanate mit aliphatisch, cycloaliphatisch, araliphatisch und/oder aromatisch gebundenen, freien Isocyanatgruppen, die bei Raumtemperatur flüssig sind.

Falls erforderlich, können die Polyisocyanate auch in Abmischung mit geringen Mengen an inerten Lösungsmitteln beispielsweise Propylencarbonat, 1-Metoxy-2-propylacetat zum Einsatz gelangen, um die Viskosität auf einen Wert innerhalb der genannten Bereiche abzusenken.

Sehr gut geeignet sind beispielsweise Vernetzerisocyanate auf Basis von Hexamethylendiisocyanat (HDI) oder von 1-Isocyanato-3,3,5-trimethyl-5-isocyanatomethylcyclohexan (IPDI) und/oder Dicyclohexylmethandiisocyanat. Unter Vernetzerisocyanate auf Basis dieser Diisocyanate sind die an sich bekannten Biuret-, Urethan-, Allophanat-, Uretdion- und/oder Isocyanuratgruppen aufweisenden Derivate dieser Diisocyanate zu verstehen, die im Anschluß an ihre Herstellung in bekannter Weise, vorzugsweise durch Destillation von überschüssigem Ausgangsdiisocyanat bis auf einen Restgehalt von weniger 0,5 Gew.-% bevorzugt weniger als 0,1% befreit worden sind. Zu den bevorzugten, erfindungsgemäß zu verwendenden, aliphatischen Polyisocyanaten gehören Polyisocyanate auf Basis von Hexamethylendiisocyanat, wie sie beispielsweise nach den Verfahren der Patentschriften EP0206059A2 erhalten werden können.

Besonders geeignete sind Polyisocyanatvernetzer, die durch den Einbau von Polyether- und/oder Salzgruppen hydrophiliert sind, wie sie z.B. in DE-OS 4 136 618 oder US 4, 663, 377 beschrieben sind.

Neben den Vernetzern mit freien Isocyanatgruppen können auch Vernetzer mit im Mittel mehr als zwei Carbodiimidguppen pro Molekül verwendet werden, wie sie in EP2552982B1 beschrieben sind. Das Polyurethan sollte beim Einsatz dieser Vernetzer über Carboxylgruppen in der Polymerkette verfügen. Neben den wässrigen Lösungen von Polycarbodiimid können auch feinteilig, mikronisierte Feststoffpolycarbodiimid-Partikel wie in EP19170799 beschrieben Verwendung finden. Eines im Handel erhältliches Polycarbodiimid ist das Desmodur^{®} 2802 von Covestro (Deutschland GmbH).

Weitere Vernetzer für wässrige Dispersionen mit wenigstens einem Polyurethan sind polyfunktionelle Aziridine wie z.B. CROSSLINKER CX-100 (Covestro Deutschland GmbH), oder Picassion XL-706 der Fa. Stahl, Niederlande. Aziridine benötigen ebenfalls Carboxylgruppen in der Polymerkette des Polyurethans.

Die Konzentration der Vernetzerkomponente richtet sich nach der Konzentration des Polyurethans im Klebstoff sowie nach der Konzentration der reaktiven Gruppen in der Polymerkette des Polyurethans. Die Methoden zur Bestimmung der Konzentration an Vernetzerkomponente in dem gebrauchsfertigen Polyurethan-Polyharnstoff-Klebstoff, insbesondere eines Polyurethan-Polyharnstoff-Dispersionsklebstoff, sind dem Fachmann bekannt. Die Auswahl und die Dosierung der Vernetzerkomponente kann von einem Fachmann auf dem Gebiet ohne hohen Aufwand ermittelt und festgelegt werden.

In einer bevorzugten Ausführungsform des Verfahrens ist der mindestens eine Vernetzer des Klebstoffs ausgewählt aus der Gruppe bestehend aus Polyisocyanaten, Polycarbodiimiden, Polyaziridinen und / oder Mischungen von mindestens zwei davon, vorzugsweise ist der mindestens eine Vernetzer hydrophil modifiziert, besonders bevorzugt ist der Vernetzer mit ionischen oder nicht-ionischen Gruppen, ganz besonders bevorzugt mit Sulphonat- oder Carboxylatgruppen und/ oder mono- oder difunktionellen Polyethergruppen, noch bevorzugter mit mono- oder difunktionellen Polyethergruppen hydrophil modifiziert.

Bevorzugt ist der mindestens eine Vernetzer ein jeweils hydrophil modifziertes, aliphatisches, cyclo-aliphatisches oder araliphatisches Polyisocyanat, vorzugweise ein jeweils hydrophil modifziertes, aliphatisches oder cyclo-aliphatisches Polyisocyanat ist, welches eine Funktionalität > 2 aufweist, vorzugsweise ausgewählt aus der Gruppe bestehend aus jeweils hydrophil modizierten Trimeren basierend auf Hexamethylen-1,6-diisocyanat, Penta-methylen-1,5-diisocyanat und / oder einer Mischung davon.

In einer bevorzugten Ausführungsform des Verfahrens weist das mindestens eine Polyurethan ein durchschnittliches Molekulargewicht Mw von ≥ 70.000 g/mol, vorzugsweise im Bereich von ≥ 70.000 g/mol bis 500.000 g/mol, besonders bevorzugt im Bereich von 90.000 g/mol bis 500.000 g/mol auf, bestimmt gemäß DIN EN ISO 13885-2 (2021-11) mit N,N-Dimethlyacetamid als Eluent und Polystyrol als Standard.

Vorteil eines Klebstoffs, bedingt durch das hohe Molekulargewicht des Polyurethans, ist eine hohe anfängliche Verbundfestigkeit, die das bekannte Phänomen des "Teleskopieren" der Folienrolle unter Zugspannung beim Aufspulen verhindert.

Wenn nicht anders beschrieben, wird das gewichtsmittlere Molekulargewicht Mw von Polymeren gemäß DIN EN ISO 13885-2 (2021-11) mit N,N-Dimethlyacetamid als Eluent und Polystyrol als Standard ermittelt.

Die Bestimmung des Molekulargewichtes Mn, Mw, Mz von Polyolen oder anderen Polymerbausteinen wird, wenn nicht anders angegeben, gemäß DIN EN ISO 13885-1:2021-11 mit Tetrahydrofuran (THF) als Eluent gegen einen Polystyrolstandard ermittelt.

In einer bevorzugten Ausführungsform des Verfahrens ist das Gewichtsverhältnis des Polyurethans zum Vernetzer des Klebstoffs im Bereich von 100:1,25 bis 100:25, vorzugsweise im Bereich von 100:2,5 bis 100:12,5 ist. Das oben genannte Gewichtsverhältnis des Polyurethans zum Vernetzer im wässrigen Zweikomponenten Klebstoff bezieht sich dabei auf die getrocknete Klebstoffformulierung bzw. auf die Gesamtmenge der nicht-flüchtigen Anteile in dem Zweikomponentenklebstoff, insbesondere dem wässrigen Zweikomponentenklebstoff.

In einer bevorzugten Ausführungsform des Verfahrens ist das Polyolefin der Monomaterial-Schichten aus der Gruppe ausgewählt, umfassend oder bestehend aus Polyethylen, Polypropylen oder Mischungen davon.

Bevorzugt enthält der Klebstoff zudem Katalysatoren, Füllstoffe, Prozesshilfsmittel, Haftvermittler, insbesondere Silane, silikonhaltige Substratnetzadditive, Stabilisatoren, insbesondere Antioxidantien oder Mischungen von mindestens zwei davon. Es ist weiter bevorzugt, dass Die Komponenten des Klebstoff werden bevorzugt vor der Applikation auf ein Substrat vermischt oder anderweitig innig in Kontakt gebracht. Gegebenenfalls werden eine oder beide Monomaterial-Schichten, die mit dem Klebstoff mittelbar oder unmittelbar in Kontakt kommen vor dem Auftragen des Klebstoffes und/oder dem in Kontaktbringen mit der aufgetragenen Klebstoffschicht einer Corona-Vorbehandlung unterzogen, um die Oberflächenenergie zu erhöhen.

In einer bevorzugten Ausführungsform des Verfahrens beträgt der Anteil des Polyolefins von 90,0 bis 99,3 Gew.-% und/oder der Anteil des Klebstoffs von 0,70 bis 10,0 Gew.-%, bevorzugt 1,0 bis 5,0 Gew.-%, jeweils bezogen auf das Gesamtgewicht des Monomaterial-Mehrschichtsystems.

Die erfindungsgemäß einzusetzenden Polyurethanklebstoffe lassen sich zu einem signifikanten Teil ausgehend von nachwachsenden Rohstoffen herstellen. In diesem Fall werden beispielsweise Diisocyanate mit einem Anteil aus biobasiertem Kohlenstoff eingesetzt, beispielsweise wird Pentamethlyendiisocyanat hergestellt aus biobasiertem Cadaverin, Hexamethlendiisocyanat basierend auf biobasierendem Hexamethylendiamin, Methylendiisocyanat hergestellt auf biobasierendem Anilin und/oder Isophorondiisocyanat hergestellt aus biobasiertem Aceton oder aus diesen Verbindungen aufgebaute Derivate, Oligomere und/oder Prepolymere eingesetzt.

Die entsprechenden genannten Diamine sind über enzymatische Umwandlungen beispielsweise aus Zucker oder Stärkeverbindungen zugänglich.

Fettsäuren können durch biotechnologische und enzymatische Verfahren synthetisiert werden. Hierbei umfasst die Methode insbesondere die Fermentation durch Mikroorganismen zur Produktion von Fettsäuren, die enzymatische Hydrolyse von Triglyceriden, sowie die mikrobielle Synthese aus Zuckern oder Stärke. Des Weiteren existieren Verfahren, die eine nachhaltige Gewinnung von Fettsäuren aus pflanzlichen und tierischen Quellen oder durch biochemische Umwandlungsprozesse ermöglichen.

Die Erfindung betrifft ferner ein Monomaterial-Mehrschichtsystem, insbesondere ein recyclefähiges Monomaterial-Mehrschichtsystem, erhalten oder erhältlich nach dem erfindungsgemäßen Verfahren.

In einer bevorzugten Ausführungsform des Monomaterial-Mehrschichtsystems als, vorzugsweise recyclefähiges, Verpackungsmaterial, insbesondere Verpackungsmaterial für Lebensmittel.

Die Erfindung betrifft ferner die Verwendung eines erfindungsgemäßen Klebstoffs in Monomaterial-Mehrschichtsystemen, insbesondere zur Verbesserung der Recyclingfähigkeit von Monomaterial-Mehrschichtsystemen, wobei das Material der Monomaterial-Schichten Polyolefine mit einem Anteil von 80,0 bis 99,3 Gew.-% umfasst, bezogen auf das Gesamtgewicht des Monomaterial-Mehrschichtsystems.

Die Erfindung betrifft ferner auch Monomaterial-Mehrschichtsysteme, insbesondere recyclefähige Monomaterial-Mehrschichtsysteme, welche durch das erfindungsgemäße Verfahren erhalten werden oder erhältlich sind. Die erfindungsgemäßen Monomaterial-Mehrschichtsysteme lassen sich dabei unter anderem als, vorzugsweise recyclefähiges, Verpackungsmaterial, insbesondere Verpackungsmaterial für Lebensmittel einsetzen/verwenden.

Da sich die erfindungsgemäßen Monomaterial-Mehrschichtsystem zur Herstellung von hochwertigen Rezyklaten eignen, betrifft die Erfindung folglich auch ein Verfahren zur Gewinnung eines Rezyklats aus Monomaterial-Mehrschichtsystem-haltigem Abfall, welcher ein erfindungsgemäßes Monomaterial-Mehrschichtsystem enthält, wobei die Gewinnung die folgenden Schritte umfasst:
i) gegebenenfalls Sortierung der Materialmischung;
ii) Zerkleinerung, Waschen und optional Sterilisation des Monomaterial-Mehrschichtsystem-haltigen Abfalls unter Erhalt einer Materialmischung;
iii) gegebenenfalls Mischen der Materialmischung mit weiteren Bestandteilen, insbesondere mit Polyolefinen;
iv) Weitere Aufarbeitung, insbesondere Schmelzen und Extrudieren, der Materialmischung unter Erhalt des Rezyklats.

Bei diesem Verfahren handelt es sich also um ein mechanisches Recyclingverfahren. Es können dabei neben den erfindungsgemäßen auch nicht erfindungsgemäße Monomaterial-Mehrschichtsysteme, insbesondere recyclebare Monomaterial-Mehrschichtsysteme, sowie weitere Zuschlagstoffe (weitere Bestandteile) wie synthetisch hergestelltes bzw. nicht wiederverwendetes PE- oder PO-Granulat (sogenannte "Virgin" Materialien bzw. "Virgin-Polyolefine") eingesetzt werden.

Unter Rezyklat im Sinne der Erfindung versteht man also ein Produkt, welches zumindest nach Zerkleinerung und Waschen des Monomaterial-Mehrschichtsystem-haltigen Abfalls und weiterer Aufarbeitung erhalten wird. Bevorzugt beinhaltet die weitere Aufarbeitung einen Extrusionsprozess, wobei das Rezyklat dann z.B. in Granulat- oder Strangform erhalten werden kann. Das Rezyklat umfasst mindestens ein Polyolefin und mindestens einen Polyurethanklebstoff in ausgehärteter Form.

Ein homogenes Rezyklat wird, beispielsweise nach Aufschmelzen und Extrudieren, insbesondere dann erzeugt, wenn 2 bis 20 Gew.-% an Fettsäureester-Einheiten im ausgehärteten Klebstoff enthalten sind. Insbesondere handelt es sich bei den Fettsäureester-Einheiten um solche, die durch Verwendungen von Glycerolmonostearat als Komponente (b) in das Polyurethan eingebaut werden.

Die erfindungsgemäßen Rezyklate können zur Herstellung von Folien oder anderen Formteilen eingesetzt werden, gegebenenfalls unter Zugabe von (weiteren) Virgin-Polyolefinen. Folglich betrifft die Erfindung auch Formteile und Folien erhalten oder erhältlich durch die Verarbeitung eines gemäß dem erfindungsgemäßen Recyclingverfahrens erhaltenen oder erhältlichen Rezyklats.

### Beispiele

Die vorliegende Erfindung wird im Folgenden anhand der nachfolgenden Beispiele näher erläutert.

### Messmethoden

### Bestimmung des Molekulargewichts

Bestimmung des Molekulargewichts von Polyurethandispersionspolymeren nach Gel-Permeations-Chromatographie (GPC): Die Bestimmung des Molekulargewichtes Mn, Mw, Mz erfolgt, wenn nicht anders angegeben erfolgt gemäß DIN EN ISO 13885-2:2021-11 mit N,N-Dimethlyacetamid als Eluent gegen einen Polystyrolstandard.

Bestimmung des Molekulargewichts von Polymer-Bausteinen zur Herstellung einer Polyurethandispersion nach Gel-Permeations-Chromatographie (GPC): Die Bestimmung des Molekulargewichtes Mn, Mw, Mz erfolgt, wenn nicht anders angegeben erfolgt gemäß DIN EN ISO 13885-1:2021-11 mit Tetrahydrofuran (THF) als Eluent gegen einen Polystyrolstandard.

### Bestimmung der Hydroxylzahl

Die Hydroxylzahl (oder OH-Zahl) einer Verbindung wird, wenn nicht anders angegeben, nach DIN EN ISO 4629-2-2016-12 ermittelt. N-Methylpyrrolidon wird in 5.1 und 5.5 jeweils durch Pyridin ersetzt, als Lösemittel für den Katalysator wird in 5.2 Ethanol statt Methanol verwendet.

### Ermittlung der nicht-flüchtigen Anteile

Der Ermittlung der nicht-flüchtigen Anteile der Polymerdispersionen erfolgte nach DIN EN ISO 3251 (2019-09), Einwaage 1 g, Trocknung für 1 h bei 125 °C.

### Bestimmung der Isocyanat Gehalts

Die Bestimmung der NCO-Gehalte erfolgte titrimetrisch nach DIN EN ISO 11909:2007-05.

### Allgemeines Verfahren zum Nachweis von Glycerolmonostearat

Um Fettsäuren, wie Glycerolmonostearat nachzuweisen, muss das Polymer zunächst in seine Monomere zerlegt werden. Dafür gibt es zwei bevorzugte Methoden:
Hydrolytischer Aufschluss (DIN EN ISO 620 - 2022-2)
- Basische Hydrolyse (Natriumhydroxid, NaOH) oder
- Saure Hydrolyse (Salzsäure, HCl, oder Methansulfonsäure)
- Zersetzung des Polyesters in Glycerol, Stearinsäure und ggf. weitere Monomere Methanolyse (DIN EN ISO 12966-3-2016-11)
- Auflösung des Polyesters in Methanol mit Katalysator (z. B. Schwefelsäure oder Bortrifluorid)
- Bildung von Fettsäuremethylestern (FAME) und Glycerolderivaten
- Geeignet für die anschließende GC- oder HPLC-Analyse

Gaschromatographie (GC) nach Methanolyse zur Identifizierung und Quantifizierung von Stearinsäuremethylester und Glycerin per GC, was einen Rückschluss auf die Zusammensetzung ermöglicht.

### Materialien:

Es wurden die folgenden Rohstoffe und Materialien eingesetzt:
Die Rohstoffe wiesen eine Reinheit, wenn nicht anders angegeben, von ≥ 98 Gew.-% auf.
***Rohstoff zur Herstellung von Monomaterial-Schichten***
BorShape^{®} FX1001: Alpha-Olefin Terpolymer Polyethylen (Pellets) ***Monomaterial-Schichten***
Folie aus Cast-Polypropylen (cPP): Cast-Polypropylen Folie ohne Prägung PB81AB mit 50 µm Dicke; Hersteller: Profol GmbH, Materialnummer 15357005
***Rohstoffe für die Herstellung der wässrige Dispersion enthaltend mindestens ein Polyurethan***
Polyester 1: Polyester bestehend aus Adipinsäure und Butandiol mit einer OHZ = 50 mgKOH/g
Polyester 2: Polyesterdiol aus 1,6-Hexandiol, Neopentylglycol und Adipinsäure, OH-Zahl = 56 mgKOH/g
Polyester 3: Polyesterdiol aus 1,6-Hexandiol und Phthalsäureanhydrid, OH-Zahl= 56 mgKOH/g Glycerolmonostearat (Carl Roth GmbH + Co KG/DE)
Desmodur^{®} H: Hexamethylendiisocyanat-1,6 (Covestro Deutschland AG, Leverkusen/DE)
Desmodur^{®} I: Isophorondiisocyanat (Covestro Deutschland AG, Leverkusen/DE)
Aceton (Sigma-Aldrich Chemie GmbH/DE)
Natriumsalz der N-(2-Aminoethyl)-2-aminoethansulfonsäure: (Sigma-Aldrich Chemie GmbH/DE)
Ethylendiamin (Sigma-Aldrich Chemie GmbH/DE)
***Wässrige Dispersion enthaltend mindestens ein Polyurethan***
***Dispersion 1***
461 g Polyester 1 mit einem mittleren Molekulargewicht Mn von etwa 2250 g/mol und 18 g Glycerolmonostearat mit einem mittleren Molekulargewicht Mn von etwa 358 g/mol wurden bei 110°C und 15 mbar 1 Stunde lang entwässert. 21,6 g Desmodur^{®} I und 39,3 g Desmodur^{®} H wurden bei 90°C zugegeben und die Mischung wurde bei 90°C gerührt, bis ein konstanter Isocyanatgehalt von 1,2% erreicht war. Das Reaktionsgemisch wurde in 746 g Aceton aufgelöst und auf 48°C abgekühlt. Zu der homogenen Lösung wurde unter kräftigem Rühren eine Lösung von 16,4 g Natriumsalz der N-(2-Aminoethyl)-2-aminoethansulfonsäure, 1,2 g Ethylendiamin in 43 g Wasser zugegeben. Nach 30 Minuten wurde die Mischung durch Zugabe von 767 g Wasser dispergiert. Nach destillativer Entfernung des Acetons erhielt man eine wässrige Polyurethan-Polyharnstoff-Dispersion mit einem nicht-flüchtigen Anteile von 40,3 Gew.-%. Der Glycerolmonostearat-Gehalt des Polyurethan-Dispersionspolymers betrug 3,3 %. Das mittlere Molekulargewicht Mw betrug 151.000 g/mol.

### Dispersion 2

432 g Polyester 1 mit einem mittleren Molekulargewicht Mn von etwa 2250 g/mol und 45,9 g Glycerolmonostearat mit einem mittleren Molekulargewicht Mn von etwa 358 g/mol wurden bei 110°C und 15 mbar 1 Stunde lang entwässert. 27,0 g Desmodur^{®} I und 49,1 g Desmodur^{®} H wurden bei 90°C zugegeben und die Mischung wurde bei 90°C gerührt, bis ein konstanter Isocyanatgehalt von 1,4% erreicht war. Das Reaktionsgemisch wurde in 765 g Aceton aufgelöst und auf 48°C abgekühlt. Zu der homogenen Lösung wurde unter kräftigem Rühren eine Lösung von 20,5 g Natriumsalz der N-(2-Aminoethyl)-2-aminoethansulfonsäure, 1,5 g Ethylendiamin in 54 g Wasser zugegeben. Nach 30 Minuten wurde die Mischung durch Zugabe von 776 g Wasser dispergiert. Nach destillativer Entfernung des Acetons erhielt man eine wässrige Polyurethan-Polyharnstoff-Dispersion mit einem nicht-flüchtigen Anteile von 40,6 Gew.-%. Der Glycerolmonostearat-Gehalt des Polyurethan-Dispersionspolymers betrug 8,0 %. Das mittlere Molekulargewicht Mw betrug 99.000 g/mol.

### Dispersion 3

346 g Polyester 1 mit einem mittleren Molekulargewicht Mn von etwa 2250 g/mol und 82,5 g Glycerolmonostearat mit einem mittleren Molekulargewicht Mn von etwa 358 g/mol wurden bei 110°C und 15 mbar 1 Stunde lang entwässert. 32,4 g Desmodur^{®} I und 58,9 g Desmodur^{®} H wurden bei 90°C zugegeben und die Mischung wurde bei 90°C gerührt, bis ein konstanter Isocyanatgehalt von 1,8% erreicht war. Das Reaktionsgemisch wurde in 718 g Aceton aufgelöst und auf 48°C abgekühlt. Zu der homogenen Lösung wurde unter kräftigem Rühren eine Lösung von 24,6 g Natriumsalz der N-(2-Aminoethyl)-2-aminoethansulfonsäure, 1,8 g Ethylendiamin in 64,8 g Wasser zugegeben. Nach 30 Minuten wurde die Mischung durch Zugabe von 716 g Wasser dispergiert. Nach destillativer Entfernung des Acetons erhielt man eine wässrige Polyurethan-Polyharnstoff-Dispersion mit einem nicht-flüchtigen Anteile von 39,6 Gew.-%. Der Glycerolmonostearat-Gehalt des Polyurethan-Dispersionspolymers betrug 15,6 %. Das mittlere Molekulargewicht Mw betrug 105.000 g/mol.

### Dispersion 4

1215 g Polyester 3 wurden 1 Stunde bei 110 °C und 15 mbar A entwässert. Bei 80 °C wurden 4,6 g 1,6-Hexandiol und 179,0 g Desmodur^{®} H zugegeben und die Mischung wird 90 °C gerührt, bis ein konstanter Isocyanatgehalt von 2,28 Gew.-% erreicht war. Das Reaktionsgemisch wurde in 2490 g Aceton gelöst und dabei auf 48 °C abgekühlt. In die homogene Lösung wurde eine Lösung aus 31,9 g Natriumsalz der N-(2-Aminoethyl)-2-aminoethansulfonsäure in 300 g Wasser unter kräftigem Rühren gegeben. Nach 30 Minuten wurde durch Zugabe von 1150 g Wasser dispergiert. Nach destillativer Abtrennung des Acetons wurde eine wässrige Polyurethan-PolyharnstoffDispersion mit einen nichtflüchtigen Anteil von 50,0 Gew.-% erhalten.

Das mittlere Molekulargewicht Mw betrug 220.000 g/mol.

### Dispersion 5

450 g Polyester I und 42,67 g Polyester II wueden 1 Stunde bei 110 °C und 15 mbar A entwässert. Bei 60 °C wurden unter Rühren zunächst 2,24 g 1,4-Butandiol und danach eine Mischung aus 38,02 g Desmodur^{®} H und 25,11 g Desmodur^{®} I zugegeben. Die Mischung wurde auf 80 °C erwärmt und solange gerührt, bis ein konstanter Isocyanatgehalt von 1,30 Gew.-% erreicht war. Das Reaktionsgemisch wurde in 770 g Aceton gelöst und dabei auf 48 °C abgekühlt. In die homogene Lösung wurde eine Lösung aus 6,56 g Natriumsalz der N-(2-Aminoethyl)-2-aminoethansulfonsäure und 5,16 g Diethanolamin in 100 g Wasser unter kräftigem Rühren gegeben. Nach 30 Minuten wurde durch Zugabe von 470 g Wasser dispergiert. Nach destillativer Abtrennung des Acetons wurde eine wässrige Polyurethan-Polyharnstoff-Dispersion mit einem nichtflüchtigen Anteil von 50,0 Gew.-% erhalten.

Das mittlere Molekulargewicht Mw betrug 75.000 g/mol.

### Additive

BYK^{®} 3400 ist ein silikonhaltiges Substratnetzadditiv für wässrige Klebstoffe zur Reduzierung der Oberflächenspannung.

### Vernetzer des wässrigen Klebstoffs

Bayhydur^{®} ultra 3100 (Covestro Deutschland AG, Leverkusen/D) ist ein hydrophiles, aliphatisches Polyisocyanat auf Basis Hexamethylendiisocyanat (HDI).

### Herstellung des wässrigen Klebstoffs

Die wässrige Dispersion enthaltend mindestens ein Polyurethan wurde in einem Becherglas vorgelegt und die Vernetzer-Komponente unter langsamen Rühren zugegeben. Das Mischen erfolgte bis eine homogene Mischung erreicht wurde. Erfinderische und nicht-erfindungsgemäße Beispiele zur Herstellung eines wässrigen Klebstoffs können der folgenden Tabelle entnommen werden.

**Tabelle 1: Herstellung des wässrigen Polyurethanklebstoffs**

| Beispiel | 1 | 2 | 3 | 4 (V) | 5 (V) |
|---|---|---|---|---|---|
| **Wässrige Dispersion enthaltend mindestens ein Polyurethan** | | | | | |
| Einwaage in [g] | | | | | |
| Dispersion 1 | 100 | - | - | - | - |
| Dispersion 2 | - | 100 | - | - | - |
| Dispersion 3 | - | - | 100 | - | - |
| Dispersion 4 | - | - | - | 100 | - |
| Dispersion 5 | - | - | - | - | 100 |
| BYK^{®} 3400 | 0,5 | 0,5 | 0,5 | 0,5 | 0,5 |

| **Vernetzer-Komponente** | | | | | |
|---|---|---|---|---|---|
| Einwaage in [g] | | | | | |
| Bayhydur^{®} ultra 3100 | 3 | 3 | 3 | 3 | 3 |
| | | | | | |
| Berechneter Gehalt an Glycerolmonostearat in Gew.-% im ausgehärteten Klebstoff | 3,2 | 7,7 | 15,1 | 0 | 0 |

Bei Beispiel 4 und 5 aus Tabelle 1 handelt es sich um Vergleichsbeispiele (V), die kein Glycerolmonostearat enthalten. Die Beispiele 1 bis 3 sind erfindungsgemäß.

### Herstellung der ausgehärteten wässrigen Klebstoffe

Die Aushärtung der wässrigen Polyurethanklebstoffe aus Beispiel 1 bis 5 erfolgte in Teflon-Schalen (Durchmesser: 15cm / Tiefe: 0,5 cm ). Durch Lagerung bei 23°C und 50% relativer Luftfeuchte für 7d wurden die Klebstofffilme ausgehärtet. Die Dicke der jeweiligen Klebstofffilme betrug nach der Trocknung ca. 100 µm.

### Herstellung von Monomaterial-Mehrschichtsystemen

Die Herstellung eines Monomaterial-Mehrschichtsystemen wurde mit einem Hand-Laminiergerät, mit der Bezeichnung: K Control Coater Modell 623 / 624 (K101 / K202), durchgeführt. In dem Hand-Laminiergerät wurde eine erste Folie eingespannt (Cast-Polypropylenfolie: Cast-Polypropylen Folie mit 50 µm Dicke; Hersteller: Profol GmbH). Die Folien lagen in DIN A4 Größe vor und wurden vor der Beschichtung mit dem Klebstoff mit Corona behandelt, sodass die Oberflächenspannung > 50 dyn betrug. Auf die erste eingespannte Folie wurde anschließend der Klebstoff am oberen Rand, in Form einer Raupe aufgetragen. Danach wurde der Klebstoff mit Hilfe eines Rakels gleichmäßig auf der Folie verteilt. Der Klebstoff wurde mit einer Wärmepistole mit der Bezeichnung Steinel HL2002LE auf Stufe 100°C erwärmt, so dass sich eine Oberflächentemperatur von 60 °C ergab. Im nächsten Schritt wurde auf die beschichtete erste Folie eine zweite, identische Folie kaschiert. Der so erhaltene Verbund wurde anschließend bei 23°C für 7d gelagert. Nach der Lagerung erfolgte die Bestimmung der Verbundfestigkeit im 180°-Schälversuch.

### Bestimmung der Verbundfestigkeit im 180°-Schälversuch

Zur Bestimmung der Schälfestigkeit wurden die Verbundfolien in 15 mm breite Streifen zerschnitten. Anschließend wurden die Streifen bei 23°C in einer Universalprüfmaschine für Schälfestigkeiten der Firma Zwick (Typ 5kN Allround Table-top BT2-FA005TH.A50.002) mit einer Geschwindigkeit von 100 mm/min bei einem Winkel von 2 × 90° (180°) abgezogen und die dabei erforderliche Kraft in Newton gemessen. Die angegebenen Werte sind die Mittelwerte aus fünf Einzelmessungen nach 24 [h] Stunden und 7 [d] Tagen Lagerung bei Raumtemperatur. Eine ermittelte Verbundfestigkeit kann der folgenden Tabelle entnommen werden.

**Tabelle 2: Verbundfestigkeit**

| Beispiel | Auftragsgewicht [g/m²] | Verbundfestigkeit nach 24h [N/15mm] | Verbundfestigkeit nach 7d [N/15mm] |
|---|---|---|---|
| 1 | 4,6 | 0,9 | 8,5 |
| 2 | 4,5 | 1,6 | 8,5 |
| 3 | 4,4 | 2,1 | 9,4 |
| 4 (V) | 4,6 | 7,2 | - |
| 5 (V) | 4,8 | 3,9 | - |

Bei Beispielen 4 und 5 in der Tabelle 2 handelt es sich um Vergleichsbeispiele (V). DieBeispiele 1 bis 3 sind erfindungsgemäß.

Eine ausreichende Verbundfestigkeit ist gegeben, wenn ein Wert von mindestens 0,5 N/15mm nach 24 h Lagerung bei Raumtemperatur erreicht wird.

### Verfahren zur Gewinnung eines Rezyklats aus Rohstoffen zur Herstellung von Monomaterial-Mehrschichtsystemen

Die ausgehärteten Klebstofffilme wurden mit einer Schere auf Stücke mit einer Größe von 0,5 cm × 0,5 cm zerschnitten. Im Extrusionsprozess wurden 0,75 g der jeweiligen Klebstoffe aus Beispiel 1 bis 5 mit 14,25 g PE-Granulat BorShape^{®} FX1001 gemischt und extrudiert. Die Extrusion erfolgte in einem Laborextruder (Mikro Compounder/ DSM Xplore/ Model 2005) bei 200 °C und einer Verarbeitungszeit von 6 Min. Aus der Extrusion resultierte ein homogener Polymerstrang.

### Bewertung der Rezyklat-Qualität

Ein Teil des extrudierten Polymerstrangs wurde mit einer hydraulischen Presse (Handhebelpresse/ Vogt Maschinenbau GmbH/ LaboPress P150H) bei 200 °C, bei einer Verarbeitungszeit von 2 Min und einem Druck von 30 kN zu dünnen Polymerfilmen mit einer Dicke von 200 µm und einem Durchmesser von 5 cm verpresst. Die so erhaltenen dünnen Polymerfilme wurden nach Abkühlung zur Prüfung auf Homogenität verwendet. Analog kann ein Rezyklat direkt aus einem Monomaterial-Schichtsystem bzw. Monomaterial-Schichtsystem-haltigem Abfall erzeugt werden. In diesem Fall werden der Klebstoff und das PE-Granulat durch das Monomaterial-Schichtsystem (bzw. den Monomaterial-Schichtsystem-haltigen Abfall) ersetzt.

Die Prüfkörper bzw. dünnen Polymerfilme wurden unter ein Nikon Ni-E Lichtmikroskop mit motorisiertem Tisch gelegt, und es wurden optische Mikrofotografien der Probenoberfläche im transmittierenden Licht aufgenommen. Eine vierfache Vergrößerung des verwendeten Objektivs wurde eingesetzt. Um statistisch zuverlässige Daten zu erhalten, wurde eine Gesamtfläche von 11,84 × 10,47 cm² der Probenoberfläche mit Hilfe des automatischen Mapping-Moduls untersucht, das 5 × 4 Bilder zusammengefügte. Nach der Aufnahme der Bilder wurde eine automatische Bildanalyse mit der Nikon NIS Elements BR Version 5.4 Software durchgeführt. Defekte in der Probe wurden identifiziert, indem Bereiche in der Probe anhand eines Schwellenwerts für die Intensität von dem Rest der Probe ermittelt werden. Für Defekte mit einer geringeren optischen Dichte als die der Matrix wurde ein Schwellenwert von 150 angewendet. Für Defekte mit einer höheren optischen Dichte als die des Films wurde ein Schwellenwert von 120 angewandt. Nach der Trennung wurde eine weitere Größenbeschränkung auf die Ergebnisse angewendet, wobei Merkmale mit einem äquivalenten Durchmesser von weniger als 20 µm und einer Rundheit (Circularity) von weniger als 0,1 ausgeschlossen wurden, um Artefakte zu entfernen. Die gefilterten Ergebnisse wurden dann berechnet, und die Anzahl der Defekte, der Flächenanteil der Defekte und der mittlere äquivalente Durchmesser der Defekte wurden angegeben.

**Tabelle 3: Bewertung der Rezyklat-Qualität**

| Beispiel | Anzahl der Defekte [1] | Fläche der Defekte [%] | Gehalt an Glycerolmonostearat [Gew.-% im Rezyklat] |
|---|---|---|---|
| 6 (V) mit PE Granulat (Nullwert) | 593 | 0,5 | 0 |
| 7 mit Klebstoff aus Beispiel 1 | 287 | 0,4 | 0,16 |
| 8 mit Klebstoff aus Beispiel 2 | 245 | 0,4 | 0,39 |
| 9 mit Klebstoff aus Beispiel 3 | 259 | 0,4 | 0,75 |
| 10 (V) mit Klebstoff aus Beispiel 4 | 738 | 3,9 | 0 |
| 11 (V) mit Klebstoff aus Beispiel 5 | 887 | 3,6 | 0 |

Bei Beispielen 6, 10 und 11 in der Tabelle 3 handelt es sich um Vergleichsbeispiele (V). Die Beispiele 7 bis 9 sind erfindungsgemäß

Wie sich anhand der Ergebnisse in Tabelle 3 zeigt, weisen die erfindungsgemäßen Rezyklate eine deutlich höhere Homogenität auf, ausgedrückt durch die gegenüber den Vergleichsbeispielen 10 und 11 deutlich geringeren Anzahl und der Gesamtfläche an Fehlstellen.

## Patentansprüche

1. Ein Verfahren zur Herstellung eines Monomaterial-Mehrschichtsystems, insbesondere eines recyclefähigen Monomaterial-Mehrschichtsystems, wobei das Verfahren die folgenden Schritte umfasst oder daraus besteht:
I) Bereitstellen von wenigstens zwei Monomaterial-Schichten;
II) Auftragen eines Klebstoffs mittelbar oder unmittelbar auf wenigstens eine der beiden bereitgestellten Monomaterial-Schichten, wobei der Klebstoff mindestens ein Polyurethan sowie mindestens einen Vernetzer umfasst;
III) Verbinden der Monomaterial-Schichten mittels des Klebstoffs sowie Aushärten des Klebstoffs unter Erhalt des Monomaterial-Mehrschichtsystems;
**dadurch gekennzeichnet, dass**
das Material der Monomaterial-Schichten Polyolefine umfasst und der Anteil des Polyolefins von 80,0 bis 99,3 Gew.-% beträgt, bezogen auf das Gesamtgewicht des Monomaterial-Mehrschichtsystems,
der Anteil des ausgehärteten Klebstoffs 0,70 bis 20,0 Gew.-% beträgt, bezogen auf das Gesamtgewicht des Monomaterial-Mehrschichtsystems,
das mindestens eine Polyurethan Fettsäureester-Einheiten umfasst, welche eine Strukturformel R1-COO-R2 aufweisen, wobei
R1 ein Alkyl- oder Alkenylrest mit einer Anzahl an Kohlenstoffatomen von 6 bis 24 ist, und R2 ein hydroxyfunktioneller Alkylrest mit einer Anzahl an Kohlenstoffatomen von 1 bis 22 ist, und
wobei der ausgehärtete Klebstoff einen Anteil von 2 bis 20 Gew.-% an mindestens einem Fettsäureester aufweist, bezogen auf das Gesamtgewicht des ausgehärteten Klebstoffs.

2. Das Verfahren nach Anspruch 1, **dadurch gekennzeichnet, dass** das mindestens eine Polyurethan erhältlich ist, oder erhalten wird durch die Umsetzung der folgenden Komponenten:
(a) mindestens einem Di- und/oder Polyisocyanat,
(b) mindestens einem Diol- und/oder Polyol, welches mindestens die Fettsäureester-Einheit, aufweist und die Komponente (b) insbesondere ein Glycerolmonostearat und verschieden von Komponenten (a), (c), (d), (e) und (f) ist, ,
(c) mindestens einem weiteren Diol- und/oder Polyol, wobei die Komponente (c) verschieden von Komponenten (a), (b), (d), (e) und (f) ist,
(d) gegebenenfalls mindestens eine hydrophilierende Gruppe aufweisende Komponente, wobei die Komponente (d) verschieden von Komponenten (a), (b), (c), (e) und (f) ist,
(e) gegebenenfalls mono-, di-, und/oder tri-aminofunktionelle und/oder hydroxyamino-funktionelle Verbindungen, wobei die Komponente (e) verschieden von Komponenten (a), (b), (c), (d) und (f) ist und
(f) gegebenenfalls sonstige isocyanatreaktive Verbindungen, wobei die Komponente (f) verschieden von Komponenten (a), (b), (c), (d) und (e) ist.

3. Das Verfahren nach Anspruch 2, **dadurch gekennzeichnet, dass** das mindestens einem Di- und/oder Polyisocyanat (a) ausgewählt ist aus der Gruppe bestehend aus Hexamethylen-1,6-diisocyanat, Pentamethylen-1,5-diisocyanat, 1,4-Butandiisocyanat, Isophorondiisocyanat, Toluol-2,4-diisocyanat, Toluol-2,6-diisocyanat, Diphenylmethan-2,2'-diisocyanat, Diphenylmethan-2,4'-diisocyanat, Diphenylmethan-4,4'-diisocyanat oder Mischungen von mindestens 2 davon.

4. Das Verfahren nach einem der vorstehenden Ansprüche, **dadurch gekennzeichnet, dass** das mindestens eine Diol- und/oder Polyol der Komponente (c), ausgewählt ist aus der Gruppe bestehend aus Polyetherpolyol, Polyesterpolyol, Polycarbonatpolyol, Polylacton, Polyamide und / oder einer Mischung von mindestens zwei davon, und vorzugsweise ein mittleres Molekulargewicht Mw im Bereich von 62 bis 18000 g/mol, vorzugsweise 62 bis 8000 g/mol, besonders bevorzugt 62 bis 4000 g/mol aufweist, bestimmt gemäß DIN EN ISO 13885-1:2021-11 mit Tetrahydrofuran (THF) als Eluent gegen einen Polystyrolstandard.

5. Das Verfahren nach einem der vorstehenden Ansprüche, **dadurch gekennzeichnet, dass** die Fettsäure-Einheiten mindestens ein Glycerolmonostearat aufweist, welches ausgewählt ist aus der Gruppe bestehend aus der α-Monoglycerid-Form des Glycerolmonostearats, der β-Monoglycerid-Form des Glycerolmonostearats, Mischungen aus beiden, sowie deren isomere, hydratisierte oder solvatisierte Formen, einschließlich racemischer und Enantiomeren reiner Varianten.

6. Das Verfahren nach einem der vorstehenden Ansprüche, **dadurch gekennzeichnet, dass** der mindestens eine Vernetzer des Klebstoffs ausgewählt ist aus der Gruppe bestehend aus Polyisocyanaten, Polycarbodiimiden, Polyaziridinen und / oder Mischungen von mindestens zwei davon, vorzugsweise ist der mindestens eine Vernetzer hydrophil modifiziert, besonders bevorzugt ist der Vernetzer mit ionischen oder nicht-ionischen Gruppen, ganz besonders bevorzugt mit Sulphonat- oder Carboxylatgruppen und/ oder mono- oder difunktionellen Polyethergruppen, noch bevorzugter mit mono- oder difunktionellen Polyethergruppen hydrophil modifiziert.

7. Das Verfahren nach einem der vorstehenden Ansprüche, **dadurch gekennzeichnet, dass** das mindestens eine Polyurethan ein durchschnittliches Molekulargewicht Mw von ≥ 70.000 g/mol, vorzugsweise im Bereich von ≥ 70.000 g/mol bis 500.000 g/mol, besonders bevorzugt im Bereich von 90.000 g/mol bis 500.000 g/mol aufweist, bestimmt gemäß DIN EN ISO 13885-2 (2021-11) mit N,N-Dimethlyacetamid als Eluent und Polystyrol als Standard.

8. Das Verfahren nach einem der vorstehenden Ansprüche, **dadurch gekennzeichnet, dass** das Gewichtsverhältnis des Polyurethans zum Vernetzer des wässrigen Klebstoffs im Bereich von 100:1,25 bis 100:25, vorzugsweise im Bereich von 100:2,5 bis 100:12,5 ist.

9. Das Verfahren nach einem der vorstehenden Ansprüche, **dadurch gekennzeichnet, dass** das Polyolefin der Monomaterial-Schichten aus der Gruppe ausgewählt ist, umfassend oder bestehend aus Polyethylen, Polypropylen oder Mischungen davon.

10. Das Verfahren nach einem der vorstehenden Ansprüche, **dadurch gekennzeichnet, dass** der Anteil des Polyolefins von 90,0 bis 99,3 Gew.-% und/oder der Anteil des Klebstoffs von 0,70 bis 10,0 Gew.-%, bevorzugt 1,0 bis 5,0 Gew.-% beträgt, jeweils bezogen auf das Gesamtgewicht des Monomaterial-Mehrschichtsystems.

11. Ein Monomaterial-Mehrschichtsystem, insbesondere ein recyclefähiges Monomaterial-Mehrschichtsystem, erhalten oder erhältlich nach einem Verfahren gemäß einem der Ansprüche 1 bis 10.

12. Verwendung eines Monomaterial-Mehrschichtsystems gemäß Anspruch 11 als, vorzugsweise recyclefähiges, Verpackungsmaterial, insbesondere Verpackungsmaterial für Lebensmittel.

13. Verwendung eines Klebstoffs definiert wie in einem der Ansprüche 1 bis 10 in Monomaterial-Mehrschichtsystemen, insbesondere zur Verbesserung der Recyclingfähigkeit von Monomaterial-Mehrschichtsystemen, wobei das Material der Monomaterial-Schichten Polyolefine mit einem Anteil von 80,0 bis 99,3 Gew.-% umfasst, bezogen auf das Gesamtgewicht des Monomaterial-Mehrschichtsystems.

14. Verfahren zur Gewinnung eines Rezyklats aus Monomaterial-Mehrschichtsystem-haltigem Abfall, welcher ein Monomaterial-Mehrschichtsystem gemäß Anspruch 11 enthält, wobei die Gewinnung die folgenden Schritte umfasst:
i. gegebenenfalls Sortierung der Materialmischung;
ii. Zerkleinerung, Waschen und optional Sterilisation des Monomaterial-Mehrschichtsystem-haltigen Abfalls unter Erhalt einer Materialmischung;
iii. gegebenenfalls Mischen der Materialmischung mit weiteren Bestandteilen, insbesondere mit Polyolefinen;
iv. Weitere Aufarbeitung, insbesondere Schmelzen und Extrudieren, der Materialmischung unter Erhalt des Rezyklats.

15. Formteile erhalten oder erhältlich durch die Verarbeitung eines gemäß dem Verfahren nach Anspruch 14 erhaltenen oder erhältlichen Rezyklats.
